# EUROPEAN PATENT SPECIFICATION

(11) **EP 3 686 026 B1**
(45) Date of publication and mention of the grant of the patent: **29.12.2021**
(21) Application number: 18859456.8
(22) Date of filing: 19.09.2018
(51) Int. Cl.: B42D 25/373, B42D 25/328, B42D 25/29, B42D 25/43, G07D 7/06, G01N 21/3581

(54) **COUNTERFEIT PREVENTING STRUCTURE, COUNTERFEIT PREVENTING MEDIUM, AND COUNTERFEIT PREVENTING STRUCTURE INSPECTING METHOD**
FÄLSCHUNGSVERHINDERNDE STRUKTUR, FÄLSCHUNGSVERHINDERNDES MEDIUM UND VERFAHREN ZUR INSPEKTION EINER FÄLSCHUNGSVERHINDERNDEN STRUKTUR
STRUCTURE DE PRÉVENTION DE CONTREFAÇON, SUPPORT DE PRÉVENTION DE CONTREFAÇON ET PROCÉDÉ D'INSPECTION DE STRUCTURE DE PRÉVENTION DE CONTREFAÇON

(30) Priority: 22.09.2017 JP 2017181986
(43) Date of publication of application: 29.07.2020
(73) Proprietor: Glory Ltd., Hyogo 670-8567 (JP)
(72) Inventor: MUTA, Keitaro, Himeji-shi Hyogo 670-8567 (JP)
(74) Representative: SSM Sandmair
(86) International application number: PCT/JP2018/034607
(87) International publication number: WO 2019/059223

(56) References cited:
- WO-A1-2006/027112
- WO-A1-2009/118287
- WO-A1-2017/012862
- WO-A1-2017/038714
- JP-A- 2011 515 688
- JP-A- 2016 000 498
- JP-A- 2016 000 498
- JP-A- 2016 536 162
- JP-B2- 5 110 566
- JP-B2- 5 110 566

## Description

### TECHNICAL FIELD

The present invention relates to a forgery prevention structure for preventing forgery, a forgery prevention medium having the forgery prevention structure, and a method for inspecting the forgery prevention structure.

### BACKGROUND ART

Conventionally, forgery prevention structures for preventing forgery have been provided in sheet-like valuable mediums such as banknotes, stock certificates, bonds, checks, and coupons. For example, Patent Literature 1 discloses a technique in which a conductive layer having a split ring resonator (hereinafter, abbreviated as "SRR") is used as a forgery prevention structure. A meta-material formed by a micro SRR which has an outer diameter of about several hundred microns and acts on a terahertz electromagnetic wave, is used for forgery prevention.

Specifically, a conductive layer in which the SRRs having predetermined shapes are arranged at regular intervals into a matrix, is formed such that a transmissivity indicates a predetermined value when a terahertz electromagnetic wave having a specific frequency is irradiated. The conductive layer is provided inside or on a medium as the forgery prevention structure. Authentication of the medium can be performed based on a value of the transmissivity obtained by the terahertz electromagnetic wave being irradiated to the forgery prevention structure.

The transmissivity of the terahertz electromagnetic wave transmitted through the conductive layer changes depending on a relationship between a polarization direction of the terahertz electromagnetic wave and a direction of an open part of the SRR. When the conductive layer is divided into a plurality of regions, and the directions of the open parts of the SRRs in the respective regions are made different, a forgery prevention structure in which the transmissivity is different for each region can be achieved. When the transmissivity is measured while each region in the forgery prevention structure is scanned using the terahertz electromagnetic wave, authentication of the medium can be performed by determining whether or not the transmissivity changes according to a transmissivity in each region and a scanning width.

### CITATION LIST

### [PATENT LITERATURE]

[PTL 1] Japanese Laid-Open Patent Publication No. 2016-498

### SUMMARY OF THE INVENTION

### PROBLEMS TO BE SOLVED BY THE INVENTION

However, in the above-described conventional art, high-accuracy authentication of a medium having the forgery prevention structure cannot be performed in some cases. For example, in order to measure a transmissivity of the terahertz electromagnetic wave, positions of a transmitter and a receiver for the terahertz electromagnetic wave are fixed, and the medium is transported such that the forgery prevention structure passes between the transmitter and the receiver. When the medium is transported and the forgery prevention structure formed by the SRRs passes so as to block the terahertz electromagnetic wave that is transmitted by the transmitter and received by the receiver, the transmissivity changes according to the direction of the open part of the SRR. When the medium being transported is tilted (skewed) and an angle between the open part and the polarization direction of the terahertz electromagnetic wave changes, the transmissivity also changes. For example, when a medium is skewed and tilted by an angle of -15 to 15 degrees in a forgery prevention structure designed such that an angle between the open part and the polarization direction of the terahertz electromagnetic wave is 60 degrees, the transmissivity has a value varying between 30% and 60%. The authentication is performed by comparing the value of the transmissivity with a threshold value. However, when the threshold value is set so as to allow such a great variation in transmissivity, high-accuracy authentication cannot be performed.

The variation range of the transmissivity in a tilted medium depends on the direction of the open part of the SRR. In the above-described conventional art, the forgery prevention structure is divided into a plurality of regions, and the direction of the open part is set to be different for each region. In this case, when the medium is skewed and tilted, the transmissivity in each region varies in a different variation range depending on the direction of the open part. Therefore, the change of the transmissivity observed by scanning the forgery prevention structure may be different from a change to be observed, and high-accuracy authentication may not be performed. That is, similarly to the SRR, in a resonator structure in which a transmissivity changes according to change of an angle between the polarization direction of the terahertz electromagnetic wave and the resonator structure, high-accuracy authentication may not be performed when a medium is tilted.

An object of the present invention is to overcome the problem of the aforementioned conventional art, and to provide a forgery prevention structure, a forgery prevention medium, and a method for inspecting the forgery prevention structure, which are capable of high-accuracy authentication.

### SOLUTION TO THE PROBLEMS

In order to overcome the aforementioned problem and to attain the object, the present invention is directed to a forgery prevention structure as defined in claim 1.

According to a preferred embodiment, the anisotropic resonator and the isotropic resonator resonate with terahertz electromagnetic waves having the same frequency in the above-described invention.

According to a preferred embodiment, a region in which the anisotropic resonator and the isotropic resonator are mixed is provided in the above-described invention.

According to a preferred embodiment, a region in which a plurality of kinds of anisotropic resonators that resonate with terahertz electromagnetic waves having different polarization directions are mixed in a fixed ratio is provided in the above-described invention.

According to a preferred embodiment, a region in which a basic pattern including at least one of the anisotropic resonator and the isotropic resonator is repeatedly arranged is provided in the above-described invention.

According to a preferred embodiment, a plurality of regions that indicate different transmissivities when a predetermined terahertz electromagnetic wave is irradiated are provided in the above-described invention.

According to a preferred embodiment, the anisotropic resonator includes at least two kinds of resonators each kind of which resonates with a terahertz electromagnetic wave having a polarization direction different by 90 degrees, in the above-described invention

According to a preferred embodiment, a hologram layer having a predetermined pattern observed under visible light is further provided in the above-described invention.

According to a preferred embodiment, the forgery prevention structure according to the above-described invention is formed on a banknote.

Furthermore, the present invention is directed to a forgery prevention medium that has the forgery prevention structure according to the above-described invention.

Furthermore, the present invention is directed to a method for inspecting the forgery prevention structure as defined in claim 11.

### ADVANTAGEOUS EFFECTS OF THE INVENTION

According to the present invention, as compared with a forgery prevention structure in which split ring resonators in the same region have respective open parts in the same direction, a transmissivity is inhibited from changing when the forgery prevention structure is tilted and high-accuracy authentication can be performed.

### BRIEF DESCRIPTION OF THE DRAWINGS

[FIG. 1] FIG. 1 illustrates one mode of a forgery prevention structure.
[FIG. 2] FIG. 2 illustrates a shape of a split ring resonator.
[FIG. 3] FIGS. 3A and 3B illustrate examples of frequency characteristics of transmissivity which are obtained by irradiating a terahertz electromagnetic wave to a region in which the split ring resonator is disposed.
[FIG. 4] FIGS. 4A and 4B illustrate other shapes of a resonator structure.
[FIG. 5] FIG. 5 illustrates other shapes of an isotropic resonator.
[FIG. 6] FIG. 6 illustrates a relationship between a terahertz electromagnetic wave and the resonator structure.
[FIG. 7] FIGS. 7A to 7D illustrate basic patterns.
[FIG. 8] FIG. 8 illustrates another example where the basic pattern shown in FIG. 7 is formed.
[FIG. 9] FIGS. 9A to 9D illustrate other examples of the basic patterns.
[FIG. 10] FIGS. 10A to 10E illustrate examples of patterns each formed by a plurality of kinds of split ring resonators.
[FIG. 11] FIG. 11 is a schematic diagram illustrating a schematic internal structure of an authentication apparatus as viewed from the side thereof.
[FIG. 12] FIGS. 12A and 12B are schematic diagrams illustrating the structure shown in FIG. 11 as viewed from thereabove.
[FIG. 13] FIG. 13 is a block diagram illustrating a schematic functional configuration of the authentication apparatus.
[FIG. 14] FIG. 14 is a schematic cross-sectional view of another structural example of the forgery prevention structure.
[FIG. 15] FIG. 15 illustrates an example of a forgery prevention structure that is divided into a plurality of regions.
[FIG. 16] FIG. 16 illustrates an example of the forgery prevention structure formed from another pattern.
[FIG. 17] FIG. 17 illustrates another example of the forgery prevention structure formed from another pattern.
[FIG. 18] FIG. 18 illustrates still another example of the forgery prevention structure formed from another pattern.
[FIG. 19] FIG. 19 illustrates an example of a forgery prevention structure in which a transmissivity continuously changes.
[FIG. 20] FIG. 20 illustrates kinds of basic patterns that form a forgery prevention structure 160 shown in FIG. 19.

### DESCRIPTION OF EMBODIMENTS

A forgery prevention structure, a forgery prevention medium, and a method for inspecting the forgery prevention structure according to the present invention will be described below in detail with reference to the accompanying drawings. The present invention has a feature in which an anisotropic resonator that is an anisotropic resonator structure such as a split ring resonator (hereinafter, abbreviated as "SRR"), and an isotropic resonator that is an isotropic resonator structure such as a closed ring resonator (hereinafter, abbreviated as "CRR") structure are used to form a forgery prevention structure such that a transmissivity of a terahertz electromagnetic wave transmitted through the forgery prevention structure indicates a predetermined value.

When a polarized terahertz electromagnetic wave is irradiated to the resonator structure, and a transmissivity is obtained by measurement of an intensity of the transmitted terahertz electromagnetic wave, the transmissivity changes according to a frequency of the terahertz electromagnetic wave. This is because the resonator structure resonates with a terahertz electromagnetic wave in a specific frequency domain. The change of the transmissivity is different depending on a method of forming the resonator structure, and a transmissivity at a frequency at which the resonator structure resonates indicates a lower value in some cases and a higher value in other cases, as compared with a transmissivity at a frequency at which the resonator structure does not resonate. Hereinafter, a frequency domain in which the resonator structure resonates to change a transmissivity is referred to as a resonance frequency.

When a polarized terahertz electromagnetic wave having a resonance frequency is irradiated, a transmissivity changes in some of the resonator structures and does not change in the other of the resonator structures, depending on a polarization direction of the terahertz electromagnetic wave. Hereinafter, a resonator structure in which the transmissivity changes depending on the polarization direction of the terahertz electromagnetic wave is referred to as an anisotropic resonator, and a resonator structure in which the transmissivity does not change depending on the polarization direction of the terahertz electromagnetic wave is referred to as an isotropic resonator.

When the shape of the resonator structure is changed, a resonance frequency also changes. The width of the resonance frequency is also different depending on the resonator structure, and may be narrow in some cases and wide in the other cases. Hereinafter, in an exemplary case where the width of the resonance frequency is relatively narrow, a frequency at which the transmissivity indicates a (maximum or minimum) peak is described as a resonance frequency. However, the resonance frequency includes not only a single frequency but also the neighboring frequencies. The width of the resonance frequency can be represented based on a peak value. For example, when a relationship between a frequency and a transmissivity is represented as a graph, a width (half value width) at which the transmissivity is 50% of the peak value may be the width of the resonance frequency. When the width of the resonance frequency is wide, the width at which the transmissivity is 90% or 80% of the peak value may be set as the width of the resonance frequency.

The SRR is a kind of the anisotropic resonator, and has a ring shape having an open part (split). The ring shape is a ring-like shape, having an open part, such as an almost C-like shape that is an annular shape with an open part, or a quadrangular-ring-like shape with an open part. A conductive material is formed, into the shape of the resonator structure such as the ring shape of the SRR, on a sheet of an insulating material, thereby forming the resonator structure. When a polarized terahertz electromagnetic wave is irradiated to the anisotropic resonator such as the SRR which is formed in this manner, a transmissivity of the terahertz electromagnetic wave changes according to a frequency and a polarization direction of the terahertz electromagnetic wave. A transmissivity of a terahertz electromagnetic wave with which the resonator structure resonates indicates a value less than a transmissivity of a terahertz electromagnetic wave with which the resonator structure does not resonate.

For example, a sheet of a conductive material is cut out to form a through groove having the shape of the resonator structure such as a ring shape having an open part, thereby forming the resonator structure such as the SRR. The SRR formed by cutting out the conductive material is particularly called a complementary split ring resonator (CSRR). Also, in a case where a sheet of a conductive material is cut out to form the resonator structure, when a terahertz electromagnetic wave is irradiated to the resonator structure, a transmissivity of the terahertz electromagnetic wave transmitted through the sheet changes according to a frequency and a polarization direction of the terahertz electromagnetic wave. A transmissivity of the terahertz electromagnetic wave with which the resonator structure resonates indicates a value higher than a transmissivity of a terahertz electromagnetic wave with which the resonator structure does not resonate.

The CRR is a kind of an isotropic resonator and has a ring shape formed by removing an open part from the SRR. The CRR can be formed similarly to the SRR such that a conductive material is formed, on a sheet of an insulating material, into a shape of the resonator structure such as an annular shape of the CRR having no open part or a sheet of a conductive material is cut out to form the shape. When a polarized terahertz electromagnetic wave is irradiated to the isotropic resonator such as a CRR, the transmissivity of the terahertz electromagnetic wave changes depending on a frequency of the terahertz electromagnetic wave, whereas the transmissivity of the terahertz electromagnetic wave does not change according to change of the polarization direction of the terahertz electromagnetic wave with which the isotropic resonator resonates. When a conductive material is formed into the shape of the resonator structure, the transmissivity of the terahertz electromagnetic wave with which the isotropic resonator resonates indicates a value less than the transmissivity of the terahertz electromagnetic wave with which the isotropic resonator does not resonate, similarly to the SRR. When a sheet of a conductive material is cut out to form the shape of the resonator structure, the transmissivity of the terahertz electromagnetic wave with which the isotropic resonator resonates indicates a value higher than the transmissivity of the terahertz electromagnetic wave with which the isotropic resonator does not resonate.

When the SRR and the CRR are designed to have almost the same shape except for presence or absence of the open part, a resonance frequency, for the SRR, of the terahertz electromagnetic wave having the polarization direction perpendicular to the direction of the open part is almost the same as a resonance frequency for the CRR. Therefore, the SRR and the CRR can simultaneously resonate with the terahertz electromagnetic wave having the resonance frequency (and the neighboring frequencies). Furthermore, by adjusting the shapes of the SRR and the CRR and an interval of arrangement of the SRR and the CRR, a frequency at which the transmissivity has its peak can be made the same between the SRR and the CRR.

By forming the forgery prevention structure including the resonator structures such that the anisotropic resonator such as the SRR and the isotropic resonator such as the CRR are mixed, a transmissivity is inhibited from changing when the forgery prevention structure is tilted relative to the polarized terahertz electromagnetic wave, and authentication can be determined with high accuracy based on presence or absence of the forgery prevention structure.

As described above, a transmissivity changes in the anisotropic resonator such as the SRR when the polarization direction changes, whereas a transmissivity does not change in the isotropic resonator such as the CRR even when the polarization direction changes. Therefore, the transmissivity can be inhibited from changing when the forgery prevention structure is tilted, according to a proportion of the isotropic resonators such as the CRRs in the forgery prevention structure.

The characteristics of the detected transmissivity can be complicated due to the polarization direction of the irradiated terahertz electromagnetic wave, as compared with a case where the forgery prevention structure is formed by the SRRs in which the directions of the open parts are the same as in Patent Literature 1. Therefore, the forgery prevention structure that can make forgery difficult and allow high-accuracy authentication, can be obtained.

By forming a region including multiple resonator structures, a transmissivity of a terahertz electromagnetic wave having a specific frequency in the region can be controlled. The resonator structures may be arranged into a matrix-like pattern in which the multiple resonator structures are aligned at regular intervals in the longitudinal and transverse directions, a checkered pattern, or a honeycomb-shaped pattern.

As a method of forming a region in which a predetermined transmissivity is indicated, a method of forming, on a sheet of an insulating material, the resonator structure having a predetermined shape by using a conductive material, and a method of cutting out a sheet of a conductive material into a predetermined shape to form the resonator structure, can be used. In either method, a region in which the transmissivity of the terahertz electromagnetic wave indicates a predetermined value can be formed. In the present embodiment, an exemplary case where a conductive material is cut out to form the resonator structure will be described.

The forgery prevention structure of the present embodiment includes a conductive layer in which a transmissivity indicates a predetermined value when measured by irradiating a terahertz electromagnetic wave which has a predetermined frequency and has a polarization direction in a predetermined direction. At least two kinds of resonator structures are arranged in the conductive layer. The conductive layer includes anisotropic resonators such as the SRRs that resonate with terahertz electromagnetic waves of which polarization directions are different in units of 90 degrees when irradiated with the terahertz electromagnetic waves having a predetermined frequency, and/or isotropic resonators such as the CRRs that resonate with the terahertz electromagnetic waves regardless of the polarization directions. The predetermined direction in the present embodiment represents a direction selected as the polarization direction of a terahertz electromagnetic wave to be irradiated for measuring a transmissivity. The predetermined frequency in the present embodiment represents a frequency (resonance frequency) at which the resonator structure resonates with the terahertz electromagnetic wave and is a frequency selected as a frequency of a terahertz electromagnetic wave to be irradiated for measuring a transmissivity. In order to measure difference in transmissivity due to the resonator structure, the predetermined frequency is preferably a resonance frequency at which change of a transmissivity is great when a direction of the anisotropic resonator changes with respect to the predetermined direction (polarization direction). Specifically, the predetermined frequency is preferably in a frequency band including frequencies higher and lower than the frequency at which the transmissivity has its peak. However, when a frequency at which the transmissivity has its peak is stable for each forgery prevention structure, the predetermined frequency may be a single frequency. When variation in detected transmissivity can be allowed, the predetermined frequency may be a frequency other than the frequency at which the transmissivity has its peak.

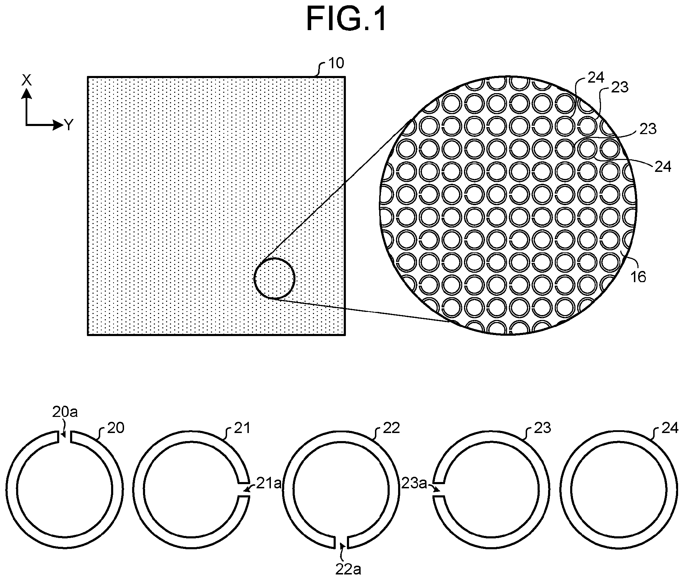

FIG. 1 illustrates an example of a forgery prevention structure 10. In FIG. 1, a plan view of the forgery prevention structure 10 is shown in the upper-left portion, and a partially enlarged view of a part of the forgery prevention structure 10 is shown in the upper-right portion. A plurality of kinds of SRRs 20 to 23, and a CRR 24 included in the forgery prevention structure 10 are shown on the lower side. The forgery prevention structure 10 is provided in a forgery prevention medium (hereinafter, simply referred to as "medium") that is a sheet-like valuable medium such as a banknote, a stock certificate, a bond, a check, and a coupon. The forgery prevention structure 10 is used to prevent forgery of the medium. Hereinafter, coordinate axes to show correspondence of each drawing are indicated in the drawings such that a polarization direction of a terahertz electromagnetic wave for measuring a transmissivity, and a polarization direction (resonance direction) of a terahertz electromagnetic wave with which the resonator structure resonates can be understandable.

A specific example of the forgery prevention structure formed by the resonator structure will be described using the SRR as an example. FIG. 1 shows an example of the forgery prevention structure 10 in which multiple SRRs 23 and CRRs 24 are arranged into a matrix such that the SRRs 23 and the CRRs 24 are mixed in a predetermined ratio. In such a structure, a transmissivity of a terahertz electromagnetic wave, having a specific frequency, which is transmitted through the forgery prevention structure 10 indicates a predetermined value.

The forgery prevention structure 10 has a conductive layer 16 in which a plurality of kinds of resonator structures selected from the SRRs 20 to 23, the CRRs 24, and the like are formed at regular intervals into a matrix. The SRRs 20 to 23 each have an almost C-shape obtained by cutting a part of the ring to form each of open parts 20a to 23a. As shown in FIG. 1, the SRR 20 has the open part 20a in the X-axis positive direction as viewed from the center of the ring, the SRR 21 has the open part 21a in the Y-axis positive direction as viewed from the center of the ring, the SRR 22 has the open part 22a in the X-axis negative direction as viewed from the center of the ring, and the SRR 23 has the open part 23a in the Y-axis negative direction as viewed from the center of the ring. When the SRR 20 is rotated clockwise by 90 degrees, it has the same shape as the SRR 21. When the SRR 21 is rotated clockwise by 90 degrees, it has the same shape as the SRR 22. When the SRR 22 is rotated clockwise by 90 degrees, it has the same shape as the SRR 23. That is, the plurality of kinds of the SRRs 20 to 23 have the open parts in different directions in units of 90 degrees. In the present embodiment, the SRR has a ring shape with the open part and the direction of the open part represents a direction as viewed from the center of the ring of the SRR.

As shown in the partially enlarged view in the upper-right portion in FIG. 1, the SRRs 23 and the CRRs 24 are aligned at regular intervals so as to form a predetermined pattern. Specifically, a basic pattern includes the four resonator structures arranged in two columns and two rows. In the basic pattern, the SRRs 23 is disposed to the right (Y-axis positive direction side) of the CRR 24 and below (X-axis negative direction side) the CRR 24, and the other CRR 24 is disposed diagonally right-downward of the CRR 24. The SRRs 23 and the CRRs 24 are arranged at regular intervals so as to repeat the basic pattern. The basic pattern formed by the SRRs 20 to 23 and the CRR 24 will be described below in detail.

The conductive layer 16 made of a conductive material is cut out to form the SRRs 20 to 23 and the CRR 24. The four kinds of the SRRs 20 to 23 have the same structure except that the open parts 20a to 23a are formed in different directions (positions on the ring). The SRRs 21 to 23 can be realized by rotating the SRR 20. The CRR 24 can be formed so as to have no open part. Therefore, the specific structure will be described by using the SRR 20 as an example.

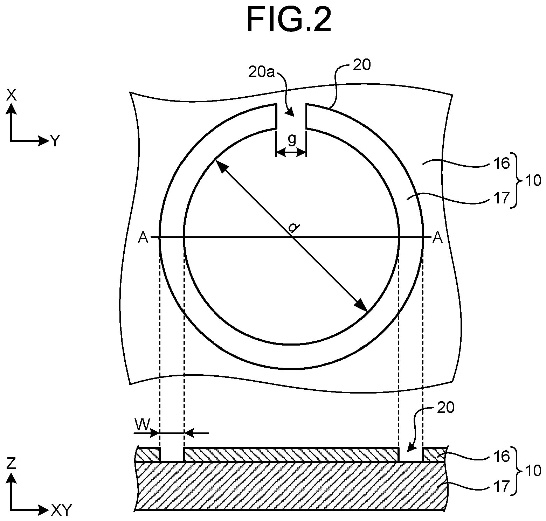

FIG. 2 illustrates the shape of the SRR 20. In FIG. 2, a plan view of the SRR 20 is shown on the upper side, and a cross-sectional view as taken along the line A-A in the plan view is shown on the lower side. The forgery prevention structure 10 includes a base member 17 made of an insulating material, and a thin-film like conductive layer 16 formed on the surface of the base member 17. The base member 17 is made of an insulating material such as paper and resin through which a terahertz electromagnetic wave can be transmitted. Meanwhile, the conductive layer 16 is made of a conductive material such as Al, Fe, Au, Cu, Ag, Mg, Zn, and Sn which blocks the terahertz electromagnetic wave.

The SRR 20 is formed by removing the almost C-shaped region from the conductive layer 16 formed on the base member 17. Specifically, the conductive layer 16 is cut out to leave the open part 20a such that a ring-like shape having a predetermined width in the radial direction is formed, thereby forming the SRR 20. As a result, a region of the almost C-shaped ring portion is formed as a groove, and the surface of the base member 17 is exposed on the bottom surface of the groove. Meanwhile, in a region, other than the ring portion, including the open part 20a, the surface of the base member 17 is left covered with the conductive layer 16. The SRRs 21 to 23 can be formed by changing regions to be left as the open parts 21a to 23a when forming the almost C-shaped groove. A method for forming the SRR on the conductive layer, the function of the SRR, and the like are disclosed in Japanese Laid-Open Patent Publication No. 2016-498 and therefore, a detailed description is omitted.

For example, the sheet-like forgery prevention structure 10 has an about 20 mm × 20 mm square shape. An inner diameter d of the SRR 20 shown on the upper side in FIG. 2 is about several hundred µm and a width g of the open part 20a is about several ten µm. A width W, in the radial direction, of the SRR 20 shown on the lower side in FIG. 2 is about several ten µm. The SRRs 21 to 23 are also formed to have the same size as the SRR 20. The SRRs 20 to 23 of the forgery prevention structure 10 are continuously arranged at regular intervals into a matrix. An interval between the SRRs 20 to 23 which are adjacent in the upper, lower, left, and right directions is about several ten µm. For example, several tens of the SRRs 20 to 23 are disposed, at regular intervals, within a distance of 10 mm. The shapes and the arrangement of the SRRs 20 to 23 are determined such that, when a terahertz electromagnetic wave having a predetermined frequency is irradiated, resonance occurs and the terahertz electromagnetic wave is transmitted at a predetermined transmissivity. The frequency of the terahertz electromagnetic wave is set, for example, between 0.1 THz and 1 THz. A size of an area in which the conductive layer 16 is irradiated with the terahertz electromagnetic wave is determined according to the SRRs 20 to 23 to be irradiated with the terahertz electromagnetic wave, and the size is about 1 mm to 5 mm in diameter at the half value width.

FIG. 2 shows a minimum structure of the forgery prevention structure 10. Another layer may be disposed on the conductive layer 16 or below the base member 17, or another layer may be disposed between the conductive layer 16 and the base member 17 as long as the characteristics of the conductive layer 16 with respect to terahertz electromagnetic wave are not hindered.

The thin-film-like forgery prevention structure 10 can be embedded in a medium such as a coupon to be subjected to the forgery prevention, or may be adhered on the medium. The forgery prevention structure 10 may be formed such that both the conductive layer 16 and the base member 17 are newly provided, or a medium such as a coupon is used as the base member 17 and the conductive layer 16 is formed directly on the medium.

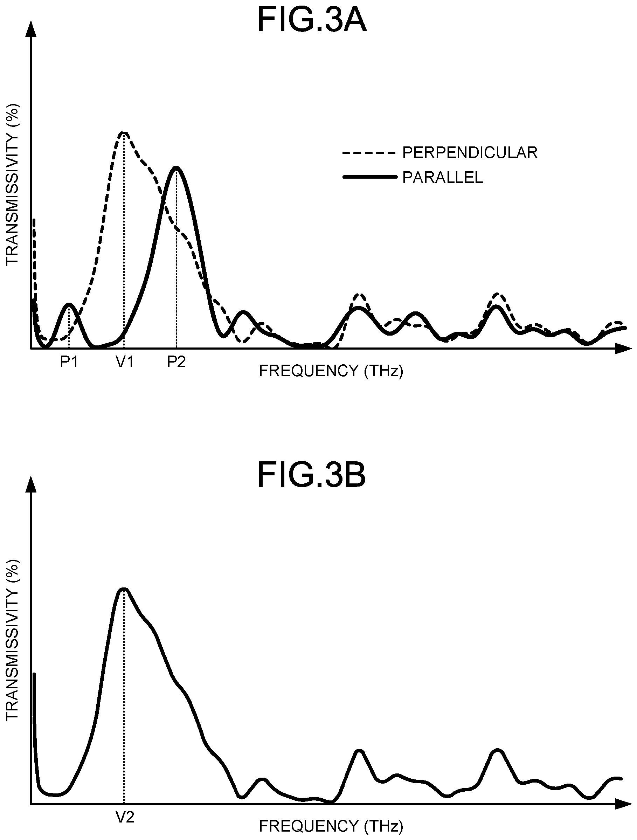

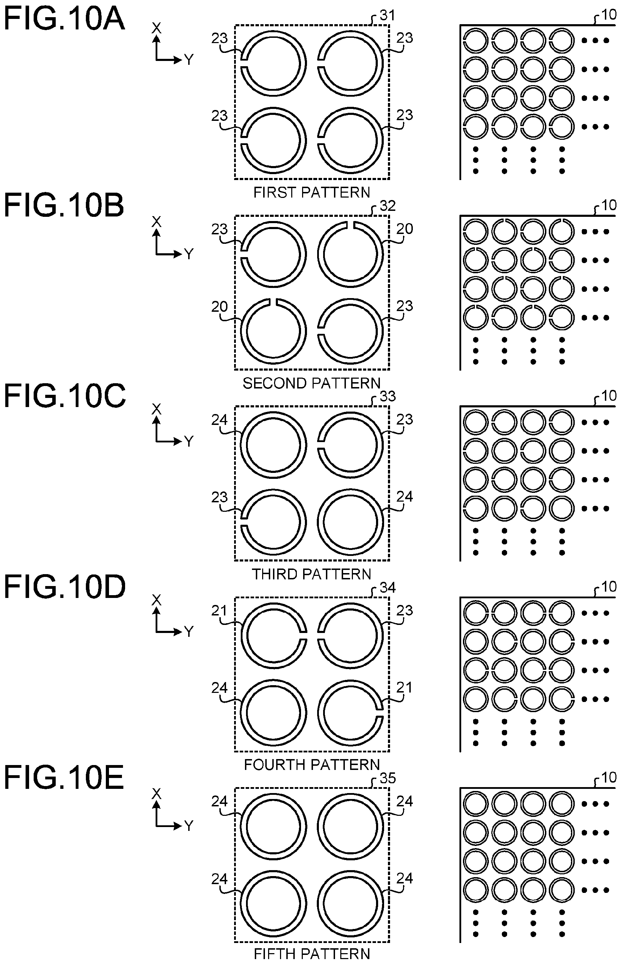

Next, the frequency of a terahertz electromagnetic wave used for detecting transmission characteristics will be described. FIGS. 3A and 3B illustrate an example of frequency characteristics against transmissivity for a terahertz electromagnetic wave. FIG. 3A illustrates frequency characteristics of a terahertz electromagnetic wave irradiated to the SRR. FIG. 3B illustrates frequency characteristics of a terahertz electromagnetic wave irradiated to the CRR. When multiple SRRs having the open parts are arranged at regular intervals as shown in FIG. 10 in an area that is sufficiently wider than an area to which a terahertz electromagnetic wave is irradiated, the frequency characteristics shown in FIGS. 3A and 3B are obtained.

When the polarization direction of the terahertz electromagnetic wave irradiated to the area and the direction of the open parts of the SRRs formed in the irradiated area are the same, that is, parallel to each other, the frequency characteristics indicated by a solid line in FIG. 3A are obtained. Meanwhile, when the polarization direction of the terahertz electromagnetic wave irradiated to the area and the direction of the open parts of the SRRs formed in the area are perpendicular to each other, the frequency characteristics indicated by a broken line in FIG. 3A are obtained. Specifically, for example, in a case where the direction of the open parts of the SRRs is the X-axis direction, the frequency characteristics indicated by the solid line are obtained when the polarization direction of the terahertz electromagnetic wave is the X-axis direction, and the frequency characteristics indicated by the broken line are obtained when the polarization direction thereof is the Y-axis direction.

When the direction of the open parts of the SRRs and the polarization direction of the terahertz electromagnetic wave are the same, two clear peaks P1, P2 are observed as indicated by the solid line in FIG. 3A. Meanwhile, when the direction of the open parts of the SRRs and the polarization direction of the terahertz electromagnetic wave are perpendicular to each other, one clear peak V1 is observed as indicated by the broken line in FIG. 3A. The frequencies at which the respective peaks are obtained are P1, V1, and P2 in the ascending order. P1, V1, and P2 each represent the resonance frequency of the SRR.

When terahertz electromagnetic waves having the same polarization directions as the terahertz electromagnetic waves having the frequency characteristics shown in FIG. 3A are irradiated to the CRR having no open part, the frequency characteristics shown in FIG. 3B are obtained. Specifically, when irradiating the terahertz electromagnetic waves indicating the frequency characteristics shown in FIG. 3A, the same frequency characteristics are obtained when irradiating the terahertz electromagnetic wave having the polarization direction perpendicular to the open part direction of the SRR and when irradiating the terahertz electromagnetic wave having the polarization direction parallel to the open part direction of the SRR. In the frequency characteristics, one clear peak V2 is observed. V2 represents the resonance frequency of the CRR.

When the inner diameter, and the width in the radial direction (d and W in FIG. 2) of the ring portion of the CRR are the same as those of the SRR, and the CRR has a shape formed by removing only the open part from the SRR, the frequency characteristics of the CRR shown in FIG. 3B are almost the same as the frequency characteristics of the SRR indicated by the broken line in FIG. 3A. A peak frequency and a transmissivity can be finely adjusted by changing the shape of the CRR and an interval of arrangement of the CRRs.

As described above, the frequency (predetermined frequency) of the terahertz electromagnetic wave is preferably a resonance frequency at which change of a transmissivity is great when the direction of the open parts of the SRRs is changed with respect to the polarization direction (predetermined direction) of the terahertz electromagnetic wave. When comparing a ratio between a transmissivity (solid line) for the X polarized light and a transmissivity (broken line) for the Y polarized light for the peaks P1, V1 and P2, the peaks at which the ratio is great are P1 and V1. When the CRR is used, a frequency at which both the SRR and the CRR can resonate is preferable. The peak V1 representing the resonance frequency for the SRR and the peak V2 representing the resonance frequency for the CRR are almost the same frequency, and both the SRR and the CRR can resonate at the frequencies. Therefore, in order to detect a transmissivity in a region in which the SRR and the CRR are mixed, a terahertz electromagnetic wave having a resonance frequency common to the SRR and the CRR such as the peak V1, the peak V2, or a mid-value between both the frequencies is used. As described above, the resonance frequency may be in a frequency band including a peak frequency and the neighboring frequencies.

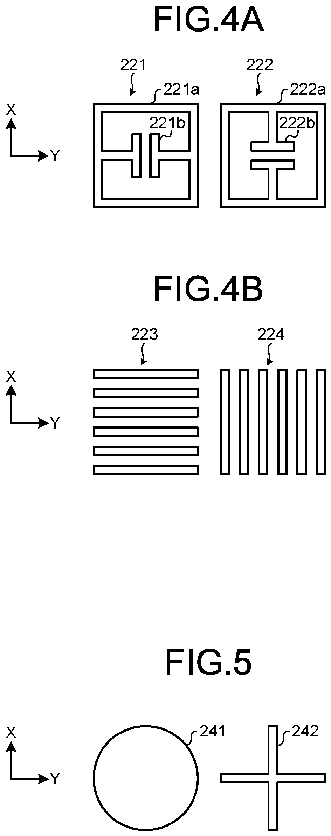

Next, an example of the resonator structure other than the SRR and the CRR will be described. The SRR is an anisotropic resonator in which a transmissivity of a terahertz electromagnetic wave changes depending on whether the polarization direction of the terahertz electromagnetic wave is the X-axis direction or the Y-axis direction. FIGS. 4A and 4B illustrates other shapes of the anisotropic resonator. FIG. 4A illustrates examples of LC resonators 221, 222 that include coil portions 221a, 222a and capacitor portions 221b, 222b. FIG. 4B illustrates examples of slit resonators 223, 224 that include a plurality of slits. The LC resonators 221, 222 and the slit resonators 223, 224 may also be each formed, similarly to the SRR, by a conductive material being formed into the shape shown in FIGS. 4A and 4B on a sheet of an insulating material, or by a sheet of a conductive material being cut out to form the shape shown in FIGS. 4A and 4B.

In the LC resonators 221, 222, similarly to the resonance frequencies P1, V1 of the SRR, an observed resonance frequency is different for each polarization direction of the irradiated terahertz electromagnetic wave. Specifically, a resonance frequency corresponding to the resonance frequency P1 for the SRR is observed when the polarization direction is parallel to the counter electrode of the capacitor portion 221b, 222b, and a resonance frequency corresponding to the resonance frequency V1 for the SRR is observed when the polarization direction is perpendicular to the counter electrode. Meanwhile, in the slit resonators 223, 224, unlike in the SRR, when the irradiated terahertz electromagnetic wave has the polarization direction perpendicular to the directions of a plurality of slits, a resonance frequency in a wide range including frequencies corresponding to the resonance frequencies P1, V1 for the SRR is observed.

In the example described below, the frequency (predetermined frequency) of the terahertz electromagnetic wave corresponds to the resonance frequency V1 for the SRR, and the SRRs 20 to 23, the LC resonators 221, 222, the slit resonators 223, 224, the CRR 24, and a hole-shaped resonator 241, a disk-shaped resonator 241, and a cross-shaped resonator 242 which are described below are designed to resonate with the terahertz electromagnetic wave having the predetermined frequency.

These resonator structures may be each formed by a sheet of a conductive material being cut out to form the shape of the resonator structure or by a conductive material being formed on a sheet of an insulating material into the shape of the resonator structure, similarly to the SRR. Similarly to the SRR, when a terahertz electromagnetic wave having the resonance frequency is irradiated to the resonator structure, the transmissivity indicates a higher value than that at a frequency at which the resonator structure does not resonate in the former case, and the transmissivity indicates a lower value than that at a frequency at which the resonator structure does not resonate in the latter case. A plurality of kinds of the resonator structures that form a region of the forgery prevention structure are all formed in the same manner.

The LC resonator 221 on the left side in FIG. 4A has a shape in which the quadrangular-ring-like coil portion 221a is connected to the capacitor portion 221b disposed inside the coil portion 221a such that the counter electrode is parallel to the X-axis direction. The LC resonator 221 resonates with the terahertz electromagnetic wave having the polarization direction in the Y-axis direction. Meanwhile, the LC resonator 222 on the right side in FIG. 4A has a shape in which the quadrangular-ring-like coil portion 222a is connected to the capacitor portion 222b disposed inside the coil portion 222a such that the counter electrode is parallel to the Y-axis direction. The LC resonator 222 resonates with the terahertz electromagnetic wave having the polarization direction in the X-axis direction.

The slit resonator 223 on the left side in FIG. 4B is shaped such that a plurality of linear slits are disposed parallel to the X-axis direction. The slit resonator 223 resonates with the terahertz electromagnetic wave having the polarization direction in the Y-axis direction. Meanwhile, the slit resonator 224 on the right side in FIG. 4B is shaped such that a plurality of linear slits are disposed parallel to the Y-axis direction. The slit resonator 224 resonates with the terahertz electromagnetic wave having the polarization direction in the X-axis direction.

The CRR is an isotropic resonator in which the transmissivity of the terahertz electromagnetic wave indicates the same value regardless of whether the polarization direction of the terahertz electromagnetic wave is the X-axis direction or the Y-axis direction. FIG. 5 illustrates other shapes of the isotropic resonator. The resonator shown on the left side in FIG. 5 is a circular hole-shaped resonator 241 that is a kind of the isotropic resonator. When a disk-shaped resonator structure of a conductive material is formed on a sheet of an insulating material, not the hole-shaped resonator 241 but the disk-shaped resonator 241 is formed. However, in the present embodiment, the hole-shaped resonator 241 will be described. The resonator shown on the right side in FIG. 5 is a cross-shaped resonator 242, having a cross-shaped slit, which is a kind of the isotropic resonator.

Each of the hole-shaped resonator 241 and the cross-shaped resonator 242 shown in FIG. 5 is an isotropic resonator, and therefore resonates with both the terahertz electromagnetic wave having the polarization direction in the X-axis direction and the terahertz electromagnetic wave having the polarization direction in the Y-axis direction to indicate almost the same transmissivity.

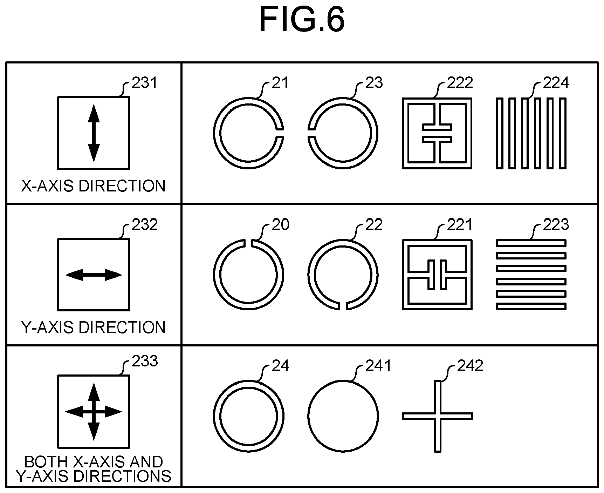

FIG. 6 illustrates a relationship between the terahertz electromagnetic wave and the resonator structure. The resonator structure 231 shown at the upper left end in FIG. 6 is an anisotropic resonator (hereinafter, referred to as "X-direction anisotropic resonator") that resonates with the terahertz electromagnetic wave having the polarization direction in the X-axis direction. The X-direction anisotropic resonator 231 includes the SRR 21, the SRR 23, the LC resonator 222, and the slit resonator 224 which are shown in the upper portion in FIG. 6. The resonator structure 232 shown in the mid-left-end in FIG. 6 is an anisotropic resonator (hereinafter, referred to as "Y-direction anisotropic resonator) that resonates with the terahertz electromagnetic wave having the polarization direction in the Y-axis direction. The Y-direction anisotropic resonator 232 includes the SRR 20, the SRR 22, the LC resonator 221, and the slit resonator 223 which are shown in the mid-portion in FIG. 6. The resonator structure 233 shown at the lower left end in FIG. 6 is an isotropic resonator in which frequency characteristics are the same between the terahertz electromagnetic wave having the polarization direction in the X-axis direction and the terahertz electromagnetic wave having the polarization direction in the Y-axis direction. The isotropic resonator 233 includes the CRR 24, the hole-shaped resonator 241, and the cross-shaped resonator 242 which are shown in the lower portion in FIG. 6. The basic pattern is formed by a plurality of the resonator structures selected from these resonator structures, and the forgery prevention structure is formed by alignment of a plurality of the basic patterns.

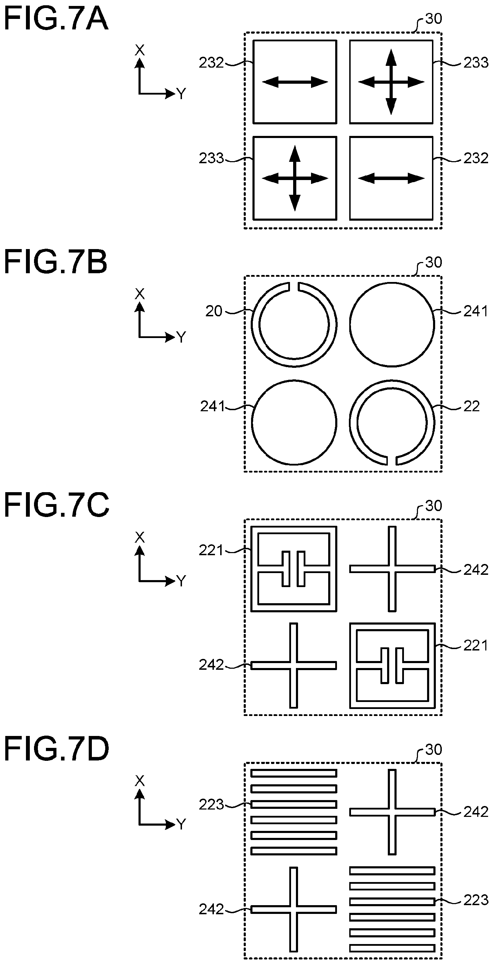

FIGS. 7A to 7D each illustrates a basic pattern 30. For example, the Y-direction anisotropic resonators 232 and the isotropic resonators 233 are arranged in two columns and two rows as shown in FIG. 7A, to form the basic pattern 30. As shown in FIG. 7B, the basic pattern 30 can be formed by the SRR 20 and the SRR 22 corresponding to the Y-direction anisotropic resonator 232, and the hole-shaped resonators 241 corresponding to the isotropic resonator 233. The basic pattern 30 may be formed by the LC resonators 221 corresponding to the Y-direction anisotropic resonator 232 and the cross-shaped resonators 242 corresponding to the isotropic resonator 233, as shown in FIG. 7C. The basic pattern 30 may be formed by the slit resonators 223 corresponding to the Y-direction anisotropic resonator 232 and the cross-shaped resonators 242 corresponding to the isotropic resonator 233 as shown in FIG. 7D.

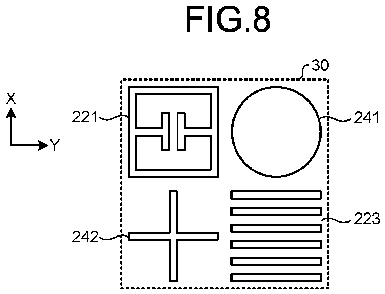

FIG. 8 illustrates another example of basic pattern 30 of which examples are shown in FIGS. 7A to 7D. As shown in FIG. 8, one basic pattern 30 may be formed by the LC resonator 221, the slit resonator 223, the hole-shaped resonator 241, and the cross-shaped resonator 242. Specifically, the resonator structure selected from the SRR 21, the SRR 23, the LC resonator 222, and the slit resonator 224 shown in FIG. 6 is used as the X-direction anisotropic resonator 231 that forms the basic pattern. Similarly, the resonator structure selected from the SRR 20, the SRR 22, the LC resonator 221, and the slit resonator 223 is used as the Y-direction anisotropic resonator 232 which forms the basic pattern. The resonator structure selected from the CRR 24, the hole-shaped resonator 241, and the cross-shaped resonator 242 is used as the isotropic resonator 233 that forms the basic pattern. Hereinafter, an example of the basic pattern will be described by using the SRRs 20 to 23 and the CRR 24. However, the SRRs 20 to 23 and the CRR 24 of each basic pattern may be replaced by the other corresponding resonator structures.

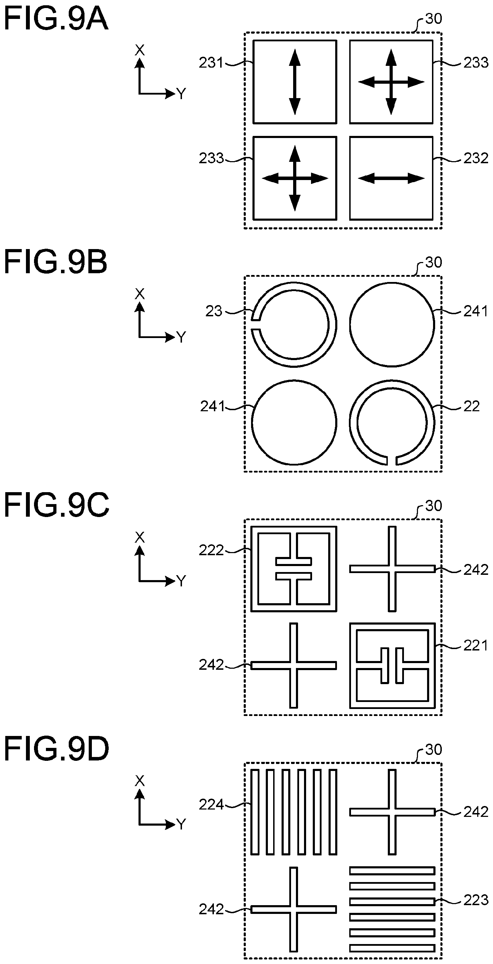

FIGS. 9A to 7D illustrate another examples of the basic pattern 30. As shown in FIG. 9A, the basic pattern 30 may include both the X-direction anisotropic resonator 231 and the Y-direction anisotropic resonator 232. That is, the basic pattern 30 may include a plurality of kinds of anisotropic resonators for different resonance directions. In this case, as shown in FIG. 9B, the basic pattern 30 can be formed by the SRR 23 corresponding to the X-direction anisotropic resonator 231, the SRR 22 corresponding to the Y-direction anisotropic resonator 232, and the hole-shaped resonators 241 corresponding to the isotropic resonator 233. As shown in FIG. 9C, the basic pattern 30 may also be formed by the LC resonator 222 corresponding to the X-direction anisotropic resonator 231, the LC resonator 221 corresponding to the Y-direction anisotropic resonator 232, and the cross-shaped resonators 242 corresponding to the isotropic resonator 233. As shown in FIG. 9D, the basic pattern 30 may also be formed by the slit resonator 224 corresponding to the X-direction anisotropic resonator 231, the slit resonator 223 corresponding to the Y-direction anisotropic resonator 232, and the cross-shaped resonators 242 corresponding to the isotropic resonator 233. Also, in this case, as explained above for FIG. 8, when one basic pattern 30 includes a plurality of the same resonator structures 231 to 233, the different kinds of the resonator structures can be mixed to be used as the same resonator structures 231 to 233.

FIGS. 10A to 10E illustrate examples of patterns formed by the SRRs 20 to 23 and the CRR 24. In each of FIGS. 10A to 10E, a pattern as a basic unit is shown on the left side, and a part of the forgery prevention structure 10 formed by arranging this basic pattern repeatedly in a matrix is shown on the right side. Each pattern is a mixed area in which the resonator structures selected from the SRRs 20 to 23 and the CRR 24 are mixed in a fixed ratio.

A first pattern 31 shown in FIG. 10A is an example of the basic pattern formed by one kind of the anisotropic resonators. In the first pattern 31, the four SRRs 23 are arranged in two columns and two rows. The first pattern 31 is formed merely by the SRRs 23 having the open parts 23a in the Y-axis direction. When the terahertz electromagnetic wave which has the predetermined frequency (V1 in FIG. 3A) and has the polarization direction in the X-axis direction is irradiated, the transmissivity in the SRR 23 becomes maximum.

A second pattern 32 shown in FIG. 10B is an example of the basic pattern formed by two kinds of anisotropic resonators. The second pattern 32 is a pattern in two columns and two rows in which one SRR 23 is disposed on the upper left side, one SRR 20 is disposed to the right of the SRR 23, one SRR 20 is disposed below the SRR 23, and one SRR 23 is disposed to the right of the SRR 20 on the lower side. The second pattern 32 is a pattern in which the SRRs 23 on the upper right side and the lower left side of the first pattern 31 are replaced by the SRRs 20. The second pattern 32 is an mixed area in which two kinds of the SRRs 20, 23 are mixed in a fixed ratio. The second pattern 32 is formed by the two SRRs 23 having the open parts 23a in the Y-axis direction and the two SRRs 20 having the open parts 20a in the X-axis direction. A ratio of the number of the SRRs 23 in which the direction of the open parts 23a is parallel to the Y-axis direction to the number of the SRRs 20 in which the direction of the open parts 20a is perpendicular to the Y-axis direction is 1:1. As shown on the right side in FIG. 10B, when the SRRs in two columns and two rows are selected from the region in which the SRRs forming the second pattern 32 are continuously arranged, a ratio of the number of the SRRs in which the directions of the open parts are parallel to the X-axis direction to the number of the SRRs in which the directions of the open parts are perpendicular to the X-axis direction is 1:1. That is, when an arbitrary region having the same size as the second pattern 32 is selected, a ratio between the number of the SRRs 23 and the number of the SRRs 20 indicates the same value.

When the terahertz electromagnetic wave which has the predetermined frequency (V1 in FIG. 3A) and has the polarization direction in the X-axis direction is irradiated, the transmissivity in the SRR 20 in which the direction of the open part 20a is parallel to the polarization direction (X-axis direction) becomes minimum. Meanwhile, the transmissivity in the SRR 23 in which the direction of the open part 23a is perpendicular to the polarization direction (X-axis direction) becomes maximum.

In a case where a terahertz electromagnetic wave is irradiated to the forgery prevention structure 10 that includes a plurality of kinds of the SRRs having the open parts in different directions, the transmissivity indicates a value between a transmissivity Tx in a case where all the SRRs have open parts in the direction parallel to the polarization direction of the terahertz electromagnetic wave, and a transmissivity Ty in a case where all the SRRs have open parts in the direction perpendicular to the polarization direction of the terahertz electromagnetic wave.

A third pattern 33 shown in FIG. 10C is an example of the basic pattern formed by one kind of anisotropic resonators and one kind of isotropic resonators. The third pattern 33 is a pattern in two columns and two rows in which one CRR 24 is disposed on the upper left side, one SRR 23 is disposed to the right of the CRR 24, one SRR 23 is disposed below the CRR 24, and the CRR 24 is disposed to the right of the SRR 23 on the lower side. The third pattern 33 is a pattern in which the SRRs 23 on the upper left side and the lower right side of the first pattern 31 are replaced by the CRRs 24. The third pattern 33 is an mixed area in which the SRRs 23 and the CRRs 24 are mixed in a fixed ratio. The third pattern 33 is formed by the two SRRs 23 having the open parts 23a in the Y-axis direction, and the two CRRs 24 having no open parts. A ratio of the number of the SRRs 23 to the number of the CRRs 24 is 1:1. As shown on the right side in FIG. 10C, when two columns and two rows are selected from a region in which the SRRs 23 and the CRRs 24 forming the third pattern 33 are continuously arranged, a ratio of the number of the SRRs 23 to the number of the CRRs 24 is 1:1. That is, when an arbitrary region having the same size as the third pattern 33 is selected, a ratio between the number of the SRRs 23 and the number of the CRRs 24 indicates the same value. The forgery prevention structure 10 shown in FIG. 1 is formed by the third pattern 33 shown in FIG. 10C.

A fourth pattern 34 shown in FIG. 10D is an example of the basic pattern formed by two kinds of anisotropic resonators and one kind of isotropic resonator. The fourth pattern 34 is a pattern in two columns and two rows in which one SRR 21 is disposed on the upper left side, one SRR 23 is disposed to the right of the SRR 21, one CRR 24 is disposed below the SRR 21, and one SRR 21 is disposed to the right of the CRR 24 on the lower side. The fourth pattern 34 is a pattern in which the CRRs 24 on the upper left side and the lower right side of the third pattern 33 are replaced by the SRRs 21, and the SRR 23 on the lower left side of the third pattern 33 is replaced by the CRR 24. The fourth pattern 34 is an mixed area in which the SRR 21, 23 and the CRR 24 are mixed in a fixed ratio. The fourth pattern 34 is formed by the three SRRs 21, 23 having the open part 21a, 23a in the Y-axis direction, and the one CRR 24 having no open parts. A ratio of the number of the SRRs to the number of the CRRs is 3:1. As shown on the right side in FIG. 10D, when two columns and two rows are selected from a region in which the SRRs 21, 23 and the CRR 24 forming the fourth pattern 34 are continuously arranged, a ratio of the number of the SRRs to the number of the CRRs is 3:1. That is, when an arbitrary region having the same size as the fourth pattern 34 is selected, a ratio between the number of the SRRs and the number of the CRRs indicates the same value.

The fifth pattern 35 shown in FIG. 10E is an example of the basic pattern formed by one kind of isotropic resonators. The fifth pattern 35 is a pattern in which the four CRRs 24 are arranged in two columns and two rows. The fifth pattern 35 is a pattern in which the SRRs 21, 23 of the fourth pattern 34 are replaced by the CRRs 24. The fifth pattern 35 is formed merely by the CRRs 24 having no open parts. When a polarized terahertz electromagnetic wave in which the resonance frequency is a predetermined frequency is irradiated, the transmissivity is almost constant regardless of the polarization direction. In addition to above explained patterns formed by the SRRs 20 to 23 and the CRR 24 in two columns and two rows, the pattern may be formed in three or more columns and three or more rows.

The basic pattern is thus formed by the resonator structures being selected from the four kinds of the SRRs 20 to 23 having the open parts 20a to 23a in the direction parallel or perpendicular to the X-axis direction, and the CRR 24 having no open parts. The transmissivity of the terahertz electromagnetic wave has a different value by changing, for example, the kinds and the number of the resonator structures to be selected. The first pattern 31 to the fifth pattern 35 are set so as to indicate different transmissivities, respectively. When the forgery prevention structure 10 is formed by arranging the basic pattern such as the second pattern 32 to the fifth pattern 35 which are formed of the resonator structures selected from the SRRs 20 to 23 and the CRR 24 continuously in a matrix, the transmissivity can be inhibited from changing due to the forgery prevention structure 10 being tilted.

The forgery prevention structure 10 of the second pattern 32 can reduce the variation range of the transmissivity since a plurality of kinds of the SRRs 20 to 23 having the open parts in different directions in units of 90 degrees are mixed. Specifically, in a case where the terahertz electromagnetic wave is irradiated, the transmissivity is reduced when the SRR in which the direction of the open part is perpendicular to the polarization direction of the terahertz electromagnetic wave is tilted, whereas the transmissivity increases when the SRR in which the direction of the open part is parallel to the polarization direction is tilted. Therefore, reduction and increase of transmissivity are compensated with each other, thereby reducing the variation range of the transmissivity.

In a case where the SRRs which increase the transmissivity when the forgery prevention structure 10 is tilted relative to the polarization direction of the terahertz electromagnetic wave and the other SRRs which reduce the transmissivity at that time, are mixed, an effect of reducing the variation range of the transmissivity with respect to the tilting can be exerted. Therefore, the kinds of the SRRs of the forgery prevention structure 10 are not limited to the SRRs in which the directions of the open parts are different by 90 degrees. However, by mixing the SRRs in which the directions of the open parts are different by 90 degrees, when the forgery prevention structure 10 irradiated with the terahertz electromagnetic wave is tilted, there are SRRs which increase the transmissivity and other SRRs which reduce the transmissivity, regardless of the polarization direction of the terahertz electromagnetic wave. Therefore, an effect of reducing the variation range of the transmissivity with respect to tilting of the forgery prevention structure 10 regardless of the polarization direction of the terahertz electromagnetic wave can be exerted.

The forgery prevention structures 10 of the third pattern 33 to the fifth pattern 35 can reduce the variation range of the transmissivity because the CRR 24 that is an isotropic resonator is included therein. Specifically, when the forgery prevention structure 10 is tilted, the transmissivity in the anisotropic resonator changes whereas the transmissivity in the isotropic resonator does not change. Therefore, change of the transmissivity can be reduced.

Hereinafter, an authentication apparatus for determining authentication of a sheet-like medium having the forgery prevention structure, based on the transmissivity of a terahertz electromagnetic wave irradiated to the forgery prevention structure, will be described. Thereafter, an example of the forgery prevention structure having a combination of a plurality of kinds of patterns will be described.

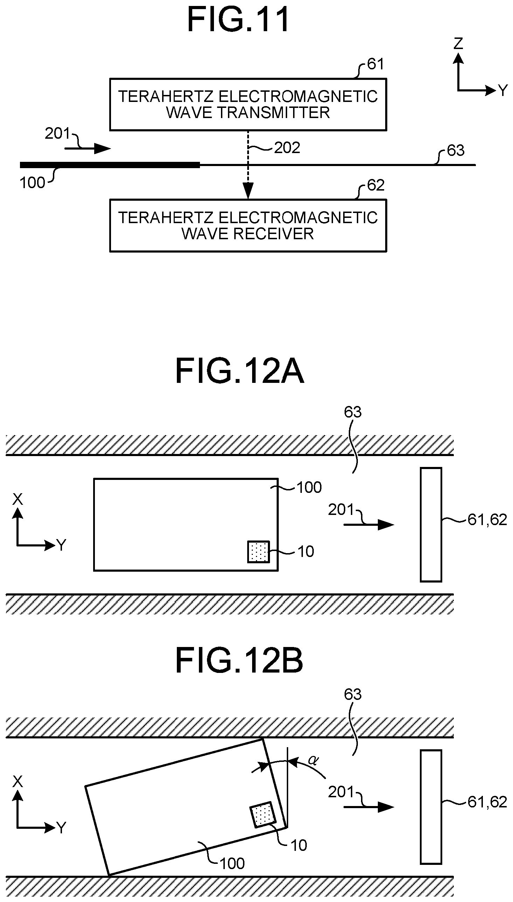

FIG. 11 is a schematic diagram illustrating an internal structure of the authentication apparatus as viewed from the side thereof. A transport unit 63 transports the medium 100 in the direction indicated by an arrow 201. A terahertz electromagnetic wave transmitter 61 is disposed above the transport unit 63. A terahertz electromagnetic wave receiver 62 is disposed below the transport unit 63. The terahertz electromagnetic wave transmitter 61 transmits a terahertz electromagnetic wave which has the predetermined frequency and has the polarization direction in the X-axis direction, in the downward direction as indicated by an arrow 202. The terahertz electromagnetic wave is irradiated to the forgery prevention structure 10 of the medium 100 being transported by the transport unit 63. The terahertz electromagnetic wave receiver 62 receives the terahertz electromagnetic wave transmitted through the forgery prevention structure 10. The terahertz electromagnetic wave is transmitted and received at fixed positions. The terahertz electromagnetic wave receiver 62 detects an intensity of the received terahertz electromagnetic wave, and converts the detected intensity to a transmissivity that represents a ratio relative to the intensity of the terahertz electromagnetic wave detected in a state where the medium 100 is not in the transport unit 63. As shown in FIG. 11, the medium 100 is transported in the direction indicated by the arrow 201 by the transport unit 63, and passes through the positions at which the terahertz electromagnetic wave is transmitted and received. The forgery prevention structure 10 is scanned in the direction indicated by the arrow 201, to obtain the waveform of the transmissivity. The transmissivity may be calculated by the terahertz electromagnetic wave receiver 62 or by a controller 64. In the latter case, the terahertz electromagnetic wave receiver 62 outputs the intensity of the received terahertz electromagnetic wave, and the controller 64 calculates the transmissivity.

FIGS. 12A and 12B are schematic diagrams illustrating the structure shown in FIG. 11 as viewed from thereabove. FIG. 12A illustrates the medium 100 being transported in a non-tilted state. FIG. 12B illustrates the medium 100 that is tilted by an angle α and being transported in the skewed state. The transmissivity of the terahertz electromagnetic wave that is transmitted through the forgery prevention structure 10 indicates different values between the state shown in FIG. 12A and the state shown in FIG. 12B, but the variation range of the transmissivity is small. Therefore, authentication of the medium 100 can be determined with high accuracy based on, for example, the value of the transmissivity, and/or a waveform of the transmissivity obtained by scanning the forgery prevention structure 10.

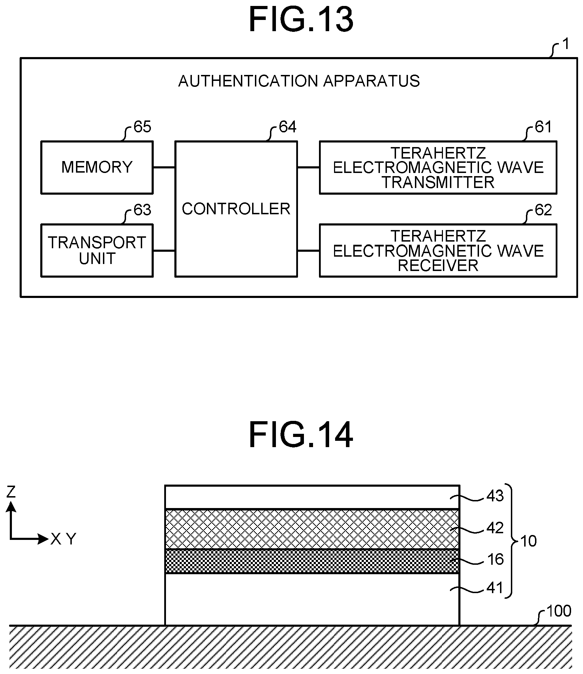

FIG. 13 is a block diagram illustrating a schematic functional configuration of an authentication apparatus 1. The authentication apparatus 1 includes the controller 64 and a memory 65 in addition to the components shown in FIG. 11. The memory 65 is a non-volatile storage unit that includes a semiconductor memory and the like. In the memory 65, data to be obtained by irradiating a predetermined terahertz electromagnetic wave to the forgery prevention structure 10, such as the values of the transmissivities, waveforms of the transmissivities, and the characteristics of the waveforms is prepared in advance as reference data.

The controller 64 controls, for example, transport of the medium 100 by the transport unit 63, and transmission and reception of the terahertz electromagnetic wave by the terahertz electromagnetic wave transmitter 61 and the terahertz electromagnetic wave receiver 62. The controller 64 obtains, for example, the value of the transmissivity of the terahertz electromagnetic wave transmitted through the forgery prevention structure 10, and/or a waveform of the transmissivity. The controller 64 compares at least one of the value of the transmissivity, the waveform of the transmissivity, the characteristics of the waveform, and the like, with the reference data that is prepared in advance in the memory 65, to perform authentication of the medium 100. The controller 64 outputs the result of the authentication to a not-illustrated external apparatus. For example, the result of the authentication is outputted to and displayed on the display unit to notify the result.

For example, the authentication apparatus 1 may be used for inspection of the forgery prevention structure 10 produced on the medium 100 in addition to authentication of the medium 100 having the forgery prevention structure 10. The authentication apparatus 1 may output an intensity, a transmissivity, or a reflectivity of the terahertz electromagnetic wave that has been transmitted through or reflected by the forgery prevention structure 10, in addition to outputting the result of the authentication. The authentication apparatus 1 uses the intensity, transmissivity, or reflectivity to inspect the forgery prevention structure 10. Specifically, the intensity, transmissivity, or reflectivity of the terahertz electromagnetic wave to be detected at the inspection is prepared in the memory 65, by using the forgery prevention structure 10 which has been properly produced. In producing the forgery prevention structure 10, a terahertz electromagnetic wave is transmitted by the terahertz electromagnetic wave transmitter 61 and irradiated to the forgery prevention structure 10 to be inspected, and the terahertz electromagnetic wave receiver 62 receives the terahertz electromagnetic wave having been transmitted through or reflected by the forgery prevention structure 10. The intensity, transmissivity, or reflectivity of the terahertz electromagnetic wave which has been thus detected from the forgery prevention structure 10 to be inspected is compared with the reference data, and whether or not the intensity, transmissivity, or reflectivity matches the reference data is determined, that is, whether or not the forgery prevention structure 10 having been produced passes the inspection is determined. Thus, the authentication apparatus 1 may compare the data detected from the forgery prevention structure 10 with the reference data, for pass/fail determination as well as authentication.

FIG. 2 shows an example where the forgery prevention structure 10 is formed by the base member 17 and the conductive layer 16 having the resonator structures such as the SRRs 20 to 23 formed therein. However, the structure of the forgery prevention structure 10 is not limited thereto. FIG. 14 is a schematic cross-sectional view of another structural example of the forgery prevention structure. The forgery prevention structure 10 shown in FIG. 14 has a structure in which the conductive layer 16 shown in FIG. 1 is adhered to the surface of the medium 100 through an adhesive layer 41, and a hologram layer 42 and a release layer 43 are formed on the conductive layer 16. For example, the release layer 43, the hologram layer 42, the conductive layer 16, and the adhesive layer 41 are formed in order, respectively, on a predetermined base material, and the release layer 43 and the layers thereabove are removed from the base material, and the layers are inverted upside down, and are adhered to the medium 100 through the adhesive layer 41, to obtain the structure shown in FIG. 14. The release layer 43 is made of a material such as transparent resin. When the forgery prevention structure 10 shown in FIG. 14 is observed from thereabove under visible light, a three-dimensional image recorded in the hologram layer 42 is observed. The resonator structure such as the SRRs 20 to 23 each having an almost C-shape is a micro structure formed in the conductive layer 16 that is a film about several µm thin, and is difficult to visually check. When a layer such as a hologram layer on which a predetermined pattern is observed is formed on the conductive layer 16, the resonator structure such as the SRRs 20 to 23 is more difficult to visually check, thereby improving the forgery preventing effect.

Next, an example of a forgery prevention structure having a combination of a plurality of kinds of patterns will be described. Examples of the forgery prevention structure 10, and the basic patterns 30, 33, 34 that include both the anisotropic resonators and the isotropic resonators have been described with reference to FIGS. 7A to 7D to FIGS. 10C and 10D. An example of a forgery prevention structure 110 which is divided into a plurality of regions, and includes the resonator structures of different patterns in the respective regions, will be described below. There are a case where only the anisotropic resonators or only the isotropic resonators are disposed in one region and a case where both the anisotropic resonators and the isotropic resonators are disposed in one region, but the forgery prevention structure 110 includes both the anisotropic resonators and the isotropic resonators. Thus, transmissivity characteristics of the terahertz electromagnetic wave obtained from the forgery prevention structure 110 can be complicated, thereby making forgery difficult. An example where the SRR is used as the anisotropic resonator and the CRR is used as the isotropic resonator will be described below, however, as described above, another resonator structure can replace each resonator.

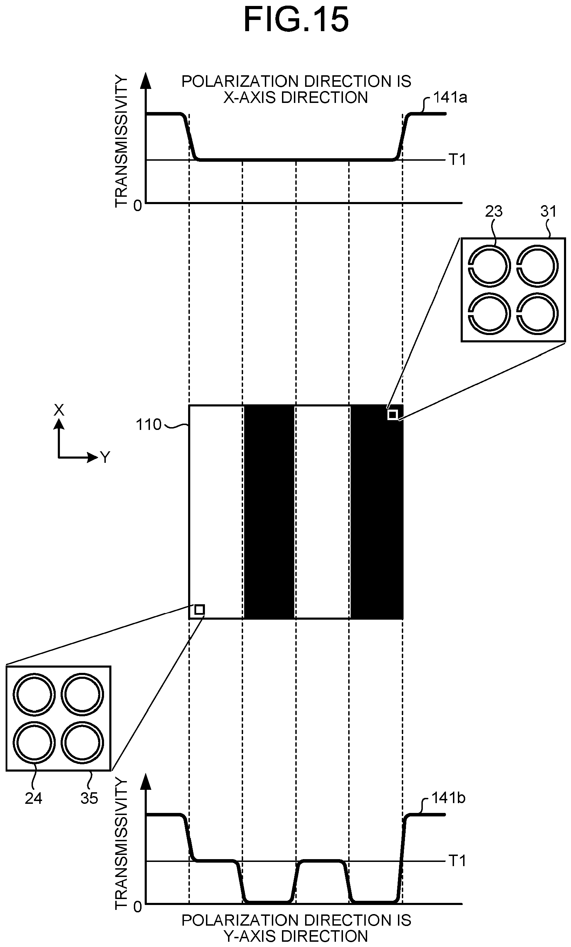

FIG. 15 illustrates an example of the forgery prevention structure 110 that is divided into a plurality of regions. The terahertz electromagnetic wave transmitter 61 and the terahertz electromagnetic wave receiver 62 are used to irradiate a terahertz electromagnetic wave to a medium transported by the transport unit 63. As a result, the forgery prevention structure 110, on a medium, shown in FIG. 15 is scanned in the Y-axis direction to obtain the transmission characteristics of the terahertz electromagnetic wave.

The forgery prevention structure 110 has an about 20 mm × 20 mm square sheet-like shape, and has four divisional elongated regions that are arranged at regular intervals in the Y-axis direction. Black regions and white regions of the forgery prevention structure 110 are each formed of the resonator structures. Specifically, as shown in partially enlarged views in FIG. 15, the black region is formed by continuously arranging the first pattern 31 shown in FIG. 10A, and the white region is formed by continuously arranging the fifth pattern 35 shown in FIG. 10E.

The black region and the white region include different kinds of resonator structures, and indicate different transmissivities depending on the polarization direction of the terahertz electromagnetic wave. The SRR 23 in the first pattern 31 of the black region is an anisotropic resonator. Therefore, in the black region, when the terahertz electromagnetic wave having the polarization direction in the X-axis direction is irradiated, the transmissivity becomes high, and, when the terahertz electromagnetic wave having the polarization direction in the Y-axis direction is irradiated, the transmissivity becomes substantially 0 (zero). The CRR 24 in the fifth pattern 35 of the white region is an isotropic resonator. Therefore, the transmissivity obtained by irradiating the terahertz electromagnetic wave having the polarization direction in the X-axis direction, and the transmissivity obtained by irradiating the terahertz electromagnetic wave having the polarization direction in the Y-axis direction, indicate almost the same value. The transmissivity in the white region shown in FIG. 15 indicates almost the same value as the transmissivity obtained by irradiating the terahertz electromagnetic wave having the polarization direction in the X-axis direction to the black region because the shape of the CRR 24 and an interval of arrangement of the CRRs 24 in the white region has been adjusted such that almost the same transmissivity is obtained in the white region and the black region as described with reference to FIG. 3B.

A transmissivity waveform 141a obtained when the forgery prevention structure 110 is scanned in the Y-axis direction by the terahertz electromagnetic wave having the polarization direction in the X-axis direction is indicated above the forgery prevention structure 110 in FIG. 15. When the polarization direction of the terahertz electromagnetic wave is the X-axis direction, the transmissivity in the black region and the transmissivity in the white region indicate almost the same value of T1 (T1>0).

A transmissivity waveform 141b obtained when the forgery prevention structure 110 is scanned in the Y-axis direction by the terahertz electromagnetic wave having the polarization direction in the Y-axis direction is indicated below the forgery prevention structure 110 in FIG. 15. When the polarization direction of the terahertz electromagnetic wave is the Y-axis direction, the transmissivity in the black region indicates almost 0, and the transmissivity in the white region indicates almost the same value T1 as the transmissivity obtained when the terahertz electromagnetic wave having the polarization direction in the X-axis direction is irradiated to the black region.

Thus, the transmissivity waveform obtained when the terahertz electromagnetic wave having the polarization direction in the X-axis direction is used, is different from the transmissivity waveform obtained when the terahertz electromagnetic wave having the polarization direction in the Y-axis direction is used. By utilizing this feature, authentication of the forgery prevention structure 110, that is, authentication of the medium 100 having the forgery prevention structure 110 can be determined.

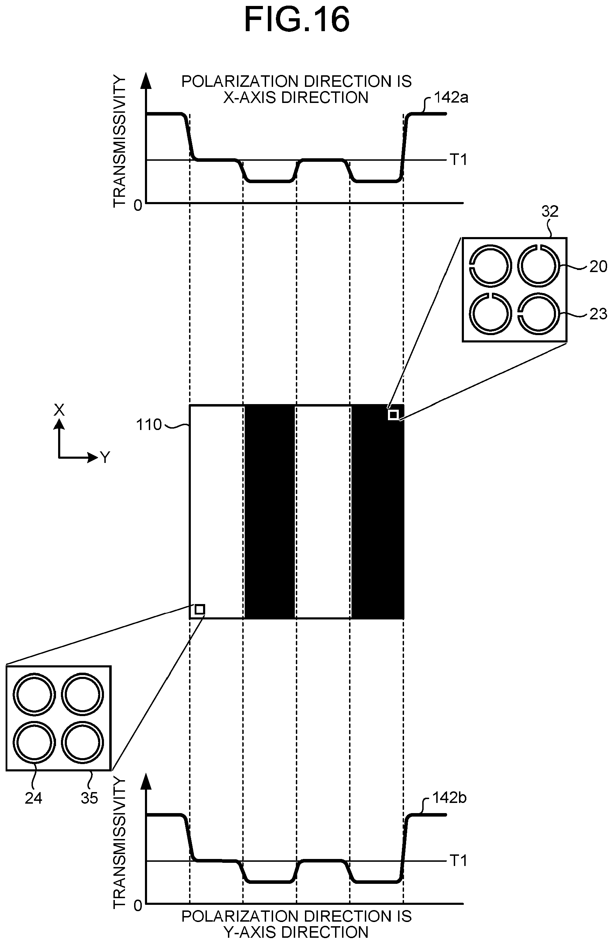

FIG. 16 illustrates an example of the forgery prevention structure 110 formed from other patterns. The black region is formed by continuously arranging the second pattern 32 shown in FIG. 10B, and the white region is formed by continuously arranging the fifth pattern 35 shown in FIG. 10E. The white region shown in FIG. 16 has the same structure and transmission characteristics as the white region shown in FIG. 15.

The second pattern 32 in the black region shown in FIG. 16 includes two kinds of resonators. Specifically, the SRRs 23 that resonate with the X-axis direction terahertz electromagnetic wave and the SRRs 20 that resonate with the Y-axis direction terahertz electromagnetic wave are included, and the number of the SRRs 23 is the same as the number of the SRRs 20. Therefore, in the black region, the transmissivity obtained by irradiating the terahertz electromagnetic wave having the polarization direction in the X-axis direction and the transmissivity obtained by irradiating the terahertz electromagnetic wave having the polarization direction in the Y-axis direction indicate almost the same value. The transmissivity in the black region that includes two kinds of resonators having different resonance directions indicates a value lower than the transmissivity in the white region.

As a result, as shown on the upper side in FIG. 16, when the forgery prevention structure 110 is scanned in the Y-axis direction by the terahertz electromagnetic wave having the polarization direction in the X-axis direction, a transmissivity waveform 142a in which the transmissivity in the white region indicates an almost constant value T1, and the transmissivity in the black region indicates an almost constant value that is lower than the value T1, is obtained. As shown on the lower side in FIG. 16, also when the forgery prevention structure 110 is scanned in the Y-axis direction by the terahertz electromagnetic wave having the polarization direction in the Y-axis direction, a transmissivity waveform 142b that is almost the same as the transmissivity waveform obtained when the forgery prevention structure 110 is scanned in Y-axis direction by the terahertz electromagnetic wave having the polarization direction in the X-axis direction, is obtained.

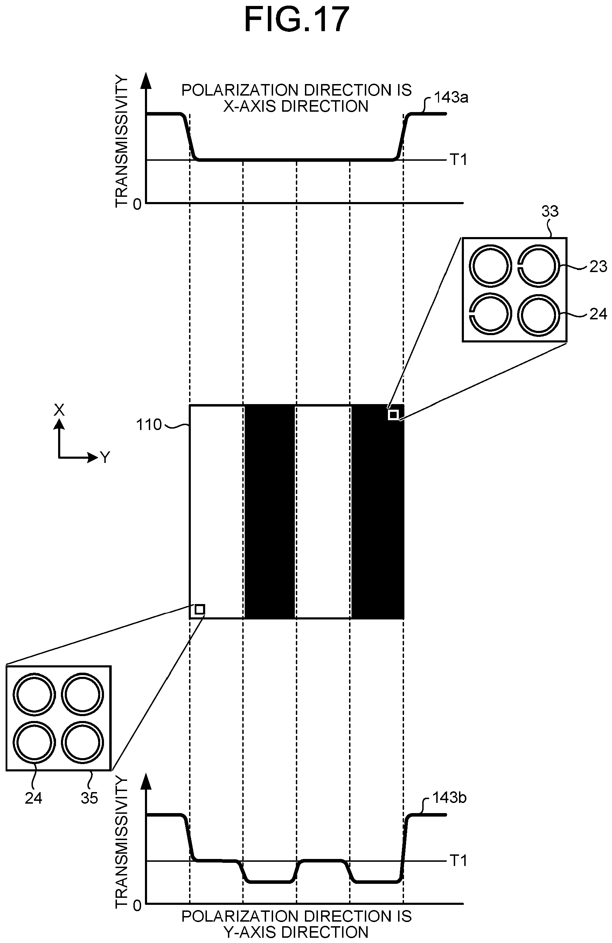

FIG. 17 illustrates another example of the forgery prevention structure 110 formed from other patterns. The black region is formed by continuously arranging the third pattern 33 shown in FIG. 10C, and the white region is formed by continuously arranging the fifth pattern 35 shown in FIG. 10E. The white region shown in FIG. 17 has the same structure and transmission characteristics as the white region shown in FIG. 15.

The third pattern 33 in the black region shown in FIG. 17 includes two kinds of resonators. Specifically, the SRRs 23 that resonate with the X-axis direction terahertz electromagnetic wave, and the CRRs 24 that resonate with both the X-axis direction terahertz electromagnetic waves and the Y-axis direction terahertz electromagnetic waves, are included, and the number of the SRRs 23 is the same as the number of the CRRs 24. Therefore, in the black region, the transmissivity indicates a high value of T1 similarly to the black region shown in FIG. 15 when the terahertz electromagnetic wave having the polarization direction in the X-axis direction is irradiated, whereas the transmissivity indicates a value lower than the value T1 when the terahertz electromagnetic wave having the polarization direction in the Y-axis direction is irradiated.

As a result, as shown on the upper side in FIG. 17, when the forgery prevention structure 110 is scanned in the Y-axis direction by the terahertz electromagnetic wave having the polarization direction in the X-axis direction, a transmissivity waveform 143a in which the transmissivity indicates the almost constant value T1 in both the white region and the black region, is obtained. Meanwhile, as shown on the lower side in FIG. 17, when the forgery prevention structure 110 is scanned in the Y-axis direction by the terahertz electromagnetic wave having the polarization direction in the Y-axis direction, a transmissivity waveform 143b in which the transmissivity in the white region indicates almost the same value T1 as that in the black region of waveform 143a whereas the transmissivity in the black region indicates a value lower than the value T1, is obtained.

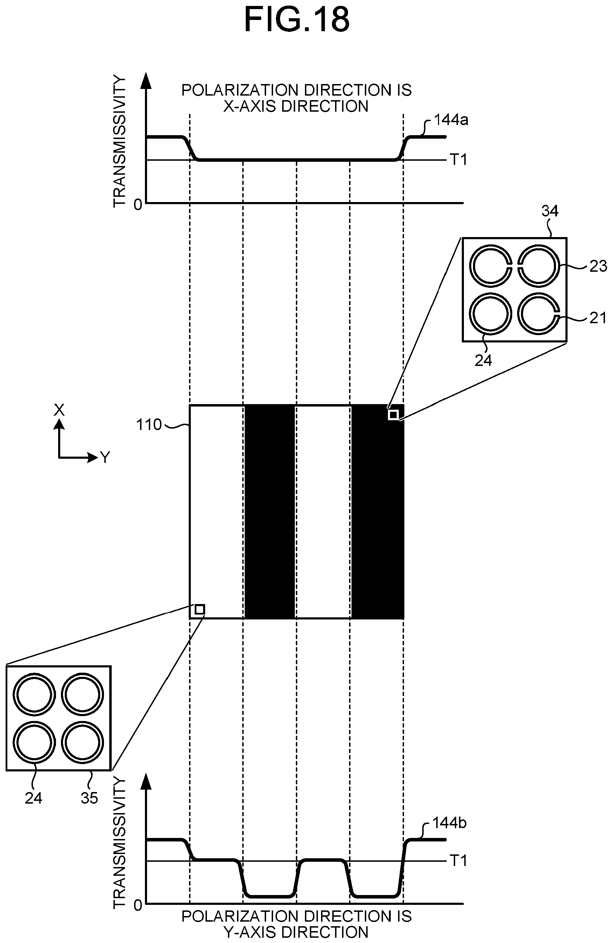

FIG. 18 illustrates still another example of the forgery prevention structure 110 formed from other patterns. The black region is formed by continuously arranging the fourth pattern 34 shown in FIG. 10D, and the white region is formed by continuously arranging the fifth pattern 35 shown in FIG. 10E. The white region shown in FIG. 18 has the same structure and transmission characteristics as the white region shown in FIG. 15.

The fourth pattern 34 in the black region shown in FIG. 18 includes three kinds of resonators. Specifically, the SRRs 21, 23 that resonate with the X-axis direction terahertz electromagnetic wave, and the CRR 24 that resonates with both the X-axis direction terahertz electromagnetic and the Y-axis direction terahertz electromagnetic waves are included. Therefore, similarly to the black region shown in FIG. 17, also in the black region shown in FIG. 18, the transmissivity indicates the same high value T1 as that in the black region shown in FIG. 15 when the terahertz electromagnetic wave having the polarization direction in the X-axis direction is irradiated, whereas the transmissivity indicates a value lower than the value T1 when the terahertz electromagnetic wave having the polarization direction in the Y-axis direction is irradiated. A ratio between the number of the SRRs 23 and the number of the CRRs 24 is 1:1 in the black region shown in FIG. 17, whereas the ratio is 3:1 in the black region shown in FIG. 18. That is, the proportion of the resonators that do not resonate with the terahertz electromagnetic wave having the polarization direction in the Y-axis direction is high. Therefore, the value of the transmissivity in the black region shown in FIG. 18 is lower than the value of the transmissivity in the black region shown in FIG. 17.

As a result, as shown on the upper side in FIG. 18, when the forgery prevention structure 110 is scanned in the Y-axis direction by the terahertz electromagnetic wave having the polarization direction in the X-axis direction, a transmissivity waveform 144a in which the transmissivity indicates the almost constant value T1 in both the white region and the black region, is obtained. Meanwhile, as shown on the lower side in FIG. 18, when the forgery prevention structure 110 is scanned in the Y-axis direction by the terahertz electromagnetic wave having the polarization direction in the Y-axis direction, the transmissivity in the white region indicates almost the same value T1 as that in the black region of waveform 144a whereas the transmissivity in the black region indicates a value lower than the value T1. The transmissivity in the black region indicates a value lower than that in the black region shown in FIG. 17.

FIG. 15 to FIG. 18 show the examples where the white region is formed merely from the CRRs 24 that are isotropic resonators. However, the white region may be a region in which the SRRs 20 to 23 and the CRR 24 are mixed. The example of the forgery prevention structure 110 formed from two kinds of regions that are the black region and the white region, has been described. However, the forgery prevention structure 110 may be formed from three or more kinds of regions.

Thus, when a plurality of kinds of regions, in which the basic patterns 31 to 35 shown in FIG. 10 are continuously arranged, is formed, a characteristic transmissivity waveform can be obtained when the terahertz electromagnetic wave is irradiated. By utilizing this feature, authentication of the forgery prevention structure 110, that is, authentication of the medium 100 having the forgery prevention structure 110 can be determined.

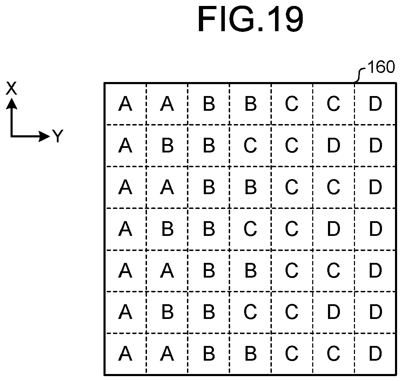

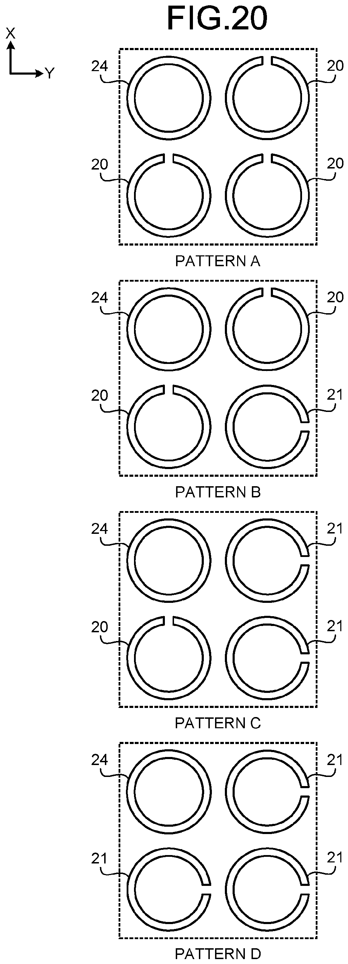

FIG. 15 to FIG. 18 show the examples where the value of the transmissivity changes stepwise. However, the transmissivity may be continuously changed. FIG. 19 illustrates an example of a forgery prevention structure 160 in which the transmissivity continuously changes. FIG. 20 illustrates kinds of the basic patterns that form the forgery prevention structure 160 shown in FIG. 19. The forgery prevention structure 160 shown in FIG. 19 is formed from four kinds of the basic patterns shown in FIG. 20. For example, a region of "A" in FIG. 19 is formed by continuously arranging the pattern A shown in FIG. 20 longitudinally and transversely.

As shown in FIG. 20, the pattern A is formed by one CRR 24 and three SRRs 20 having open parts in the X-axis direction being arranged in two columns and two rows. The pattern B is formed by one of the SRRs 20 in the pattern A being replaced by the SRR 21 having the open part in the Y-axis direction. The pattern C is formed by one of the SRRs 20 in the pattern B being replaced by the SRR 21 having the open part in the Y-axis direction. The pattern D is formed by the SRR 20 in the pattern C being replaced by the SRR 21 having the open part in the Y-axis direction. A ratio of the number of the SRRs 20, 21 that are anisotropic resonators to the number of the CRRs 24 that are isotropic resonators is 3:1 in each of the patterns A to D.

The forgery prevention structure 160 shown in FIG. 19 is divided into seven portions in each of the X-axis direction and the Y-axis direction and elongated regions are obtained in the forgery prevention structure 160. The region in the left end column is formed of the pattern A only. The region in the second column from the left is formed by the pattern A and the pattern B which alternate in the X-axis direction. The region in the third column is formed of the pattern B only. The region in the fourth column is formed by the pattern B and the pattern C which alternate. The region in the fifth column is formed of the pattern C only. The region in the sixth column is formed by the pattern C and the pattern D which alternate. The region in the seventh column is formed of the pattern D only.

The proportion of the number of the SRRs 20 included in each pattern is reduced in the order from the pattern A to the pattern D. That is, the proportion of the number of the resonator structures that resonate with the terahertz electromagnetic wave having the polarization direction in the Y-axis direction is reduced. The proportion of the number of the SRRs 20 included in each column is reduced in the order from the left end column to the right end column in the forgery prevention structure 160. That is, the proportion of the number of the resonator structures that resonate with the terahertz electromagnetic wave having the polarization direction in the Y-axis direction is reduced. Therefore, when the forgery prevention structure 160 is scanned in the Y-axis direction from the left end column to the right end column by the terahertz electromagnetic wave having the polarization direction in the Y-axis direction, the waveform of the transmissivity is obtained such that the transmissivity is gradually reduced. Meanwhile, when the forgery prevention structure 160 is similarly scanned by the terahertz electromagnetic wave having the polarization direction in the X-axis direction, the waveform of the transmissivity is obtained such that the transmissivity gradually increases. Thus, when the forgery prevention structure 160, in which the characteristic transmissivity waveform representing continuously changing transmissivity value is obtained, is provided on a medium, authentication of the medium can be determined.

In the present embodiment, the example where the first pattern 31 to the fifth pattern 35 shown in FIGS. 10A to 10E are used as the basic pattern, has been described. However, the basic pattern is not limited thereto. As long as, when an arbitrary region having the same size as the basic pattern is selected from a region in which the basic pattern is repeatedly arranged to form a matrix, a ratio between the number of the resonator structures, in the selected region, which resonate with a terahertz electromagnetic wave having the polarization direction in the X-axis direction, and the number of the resonator structures, in the selected region, which resonate with a terahertz electromagnetic wave having the polarization direction in the Y-axis direction is equal to the ratio in the basic pattern, the shape of the basic pattern, and the kinds, the number, arrangement positions, and the like of the resonator structures that form the basic pattern are not particularly limited. Specifically, for example, the resonator structures in the basic pattern may be arranged into not only a matrix in which the resonator structure is repeatedly arranged longitudinally and transversely, but also a checkered pattern or a honeycomb pattern. Also, in the method of arranging the basic pattern in each region, the basic pattern may be repeated in any manner. For example, the basic patterns may be arranged into a block pattern or a honeycomb pattern as well as a matrix. The shape of the SRR is not particularly limited as long as the transmissivity can be obtained as desired when a terahertz electromagnetic wave having a predetermined frequency is irradiated. For example, a rectangular ring-like shape may be formed. Another resonator structure may replace the illustrated resonator structure when each of the frequency and the polarization direction of the terahertz electromagnetic wave with which the resonator structure resonates is the same.

In the present embodiment, the example where the polarization direction of the terahertz electromagnetic wave used for authentication is mainly the X-axis direction, has been described. However, the terahertz electromagnetic wave in which the polarization direction is the Y-axis direction may be used. When the polarization direction of the terahertz electromagnetic wave changes, the transmissivity in each basic pattern also changes. However, the authentication can be determined as described above by preparing reference data of the transmissivity corresponding to the polarization direction.

In the present embodiment, the example where a transmissivity of a terahertz electromagnetic wave is used for authentication of the forgery prevention structure, has been described. However, a reflectivity of a terahertz electromagnetic wave may be used. A transmissivity and a reflectivity of a terahertz electromagnetic wave have such a relationship that, when one of the transmissivity and the reflectivity increases, the other thereof is reduced. For example, the structure is changed such that the terahertz electromagnetic wave transmitter 61 and the terahertz electromagnetic wave receiver 62 that are disposed so as to face each other across the transported medium 100 in FIG. 11 are disposed on the same side relative to the medium 100. When the terahertz electromagnetic wave transmitted by the terahertz electromagnetic wave transmitter 61 and reflected by the medium 100 is received by the terahertz electromagnetic wave receiver 62, the reflectivity can be measured. Therefore, also when the reflectivity of the terahertz electromagnetic wave is used, the characteristics of the forgery prevention structure based on the transmissivity of the terahertz electromagnetic wave as described above are obtained and the authentication can be determined.

As described above, when the authentication apparatus according to the present embodiment is used, a terahertz electromagnetic wave is irradiated to a forgery prevention medium such as a banknote and a coupon having the forgery prevention structure, and authentication of the forgery prevention medium can be determined based on the transmission characteristics such as the frequency and the transmissivity of the transmitted terahertz electromagnetic wave.

Each of a plurality of kinds of the resonator structures in the forgery prevention structure resonates in some cases and does not resonate in the other cases depending on the frequency and the polarization direction of the terahertz electromagnetic wave to be irradiated to the forgery prevention medium for authentication. By adjusting a ratio between the number of the resonator structures that resonate and the number of the resonator structures that do not resonate, a region through which the terahertz electromagnetic wave having a predetermined frequency is transmitted at a predetermined transmissivity can be obtained. A plurality of regions in which transmissivities are different can be combined to form the forgery prevention structure. Use of a plurality of kinds of the resonator structures in which the polarization directions of the terahertz electromagnetic waves with which the resonator structures resonate are different inhibits the transmissivity from changing when the forgery prevention structure is tilted relative to the polarization direction of the terahertz electromagnetic wave. Thus, high-accuracy authentication with the forgery prevention structure can be performed.

### INDUSTRIAL APPLICABILITY

As described above, the forgery prevention structure, the forgery prevention medium, and the method for inspecting the forgery prevention structure according to the present invention are useful for high-accuracy authentication of a forgery prevention medium having a forgery prevention structure.

### DESCRIPTION OF THE REFERENCE CHARACTERS

1 Authentication apparatus
10, 110, 160 Forgery prevention structure
20 to 23, 120 to 123 Split ring resonator (SRR)
16 Conductive layer
17 Base member
41 Adhesive layer
42 Hologram layer
43 Release layer
61 Terahertz electromagnetic wave transmitter
62 Terahertz electromagnetic wave receiver
63 Transport unit
64 Controller
65 Memory
221, 222 LC resonator
223, 224 slit resonator
241 Hole-shaped resonator
242 Cross-shaped resonator

## Claims

1. A forgery prevention structure (10) provided in or on a medium (100) for authenticating the medium (100), the forgery prevention structure (10) comprising:
an anisotropic resonator (231, 232) that resonates in response to being irradiated with a first terahertz electromagnetic wave at a first frequency, a transmissivity of the first terahertz electromagnetic wave changes with a polarization direction of the first terahertz electromagnetic wave; and
an isotropic resonator (233) that resonates in response to be irradiated with a second terahertz electromagnetic wave at a second frequency, a transmissivity of the second terahertz electromagnetic wave does not change with a polarization direction of the second terahertz electromagnetic wave.

2. The forgery prevention structure according to claim 1, wherein the first frequency and the second frequency being a same frequency.

3. The forgery prevention structure according to claim 1 or 2, wherein the anisotropic resonator and the isotropic resonator are mixed a region with at least one of another anisotropic resonator or another isotropic resonator.

4. The forgery prevention structure according to any one of claims 1 to 3, wherein the anisotropic resonator being one of a plurality of kinds of anisotropic resonators mixed in a fixed ratio in a region, the plurality of kinds of anisotropic resonators respectively resonate with terahertz electromagnetic waves having different polarization directions.

5. The forgery prevention structure according to any one of claims 1 to 4, wherein the anisotropic resonator and the isotropic resonator are arranged in a basic pattern, the basic pattern being repeated with other anisotropic resonators and other isotropic resonators in a region.

6. The forgery prevention structure according to any one of claims 1 to 5, wherein the anisotropic resonator and the isotropic resonator being arranged in a first region, the first region being one of a plurality of regions that impart different transmissivities on a predetermined terahertz electromagnetic wave in response to being irradiated with the predetermined terahertz electromagnetic wave.

7. The forgery prevention structure according to any one of claims 1 to 6, further comprising another anisotropic resonator, the another anisotropic radiator resonates with a terahertz electromagnetic wave having a polarization direction different by 90 degrees than the first terahertz electromagnetic wave.

8. The forgery prevention structure according to any one of claims 1 to 7, further comprising a hologram layer having a predetermined pattern observed under visible light.

9. The forgery prevention structure according to any one of claims 1 to 8, wherein the anisotropic resonator and the isotropic resonator are disposed in or on a banknote.

10. A forgery prevention medium having the forgery prevention structure according to any one of claims 1 to 8.

11. A method for inspecting a forgery prevention structure (10), the method comprising:
irradiating a mixed area of a forgery prevention medium (100) of the forgery prevention structure (10) with an inspection terahertz electromagnetic wave, the mixed area including an anisotropic resonator (231, 232) disposed in or on the medium (100), the anisotropic resonator (231, 232) resonates in response to being irradiated with a first terahertz electromagnetic wave at a first frequency, a transmissivity of the first terahertz electromagnetic wave changes with a polarization direction of the first terahertz electromagnetic wave, the mixed area also including an isotropic resonator (233) disposed in or on the medium (100), the isotropic resonator (233) resonates in response to be irradiated with a second terahertz electromagnetic wave at a second frequency, a transmissivity of the second terahertz electromagnetic wave does not change with a polarization direction of the second terahertz electromagnetic wave;
detecting levels of the inspection terahertz electromagnetic wave that have been reflected or transmitted; and
comparing a detected intensity, transmissivity, or reflectivity of the inspection terahertz electromagnetic wave with previously stored reference data to determine whether an article to which the forgery prevention medium (100) is disposed is a forgery.

12. The method of claim 11, wherein the article is a banknote and the comparing includes detecting whether the banknote is a forgery.

## Patentansprüche

1. Fälschungssichere Struktur (10), die in oder auf einem Medium (100) vorgesehen ist, um das Medium (100) zu authentifizieren, wobei die fälschungssichere Struktur (10) umfasst:
einen anisotropen Resonator (231, 232), der als Reaktion auf die Bestrahlung mit einer ersten elektromagnetischen Terahertz-Welle mit einer ersten Frequenz in Resonanz tritt, wobei sich die Durchlässigkeit der ersten elektromagnetischen Terahertz-Welle mit der Polarisationsrichtung der ersten elektromagnetischen Terahertz-Welle ändert; und
einen isotropen Resonator (233), der als Reaktion auf die Bestrahlung mit einer zweiten elektromagnetischen Terahertz-Welle mit einer zweiten Frequenz in Resonanz tritt, wobei sich die Durchlässigkeit der zweiten elektromagnetischen Terahertz-Welle nicht mit der Polarisationsrichtung der zweiten elektromagnetischen Terahertz-Welle ändert.

2. Fälschungssichere Struktur nach Anspruch 1, bei der die erste Frequenz und die zweite Frequenz die gleiche Frequenz sind.

3. Fälschungssichere Struktur nach Anspruch 1 oder 2, bei der der anisotrope Resonator und der isotrope Resonator in einem Bereich mit mindestens einem anderen anisotropen Resonator oder einem anderen isotropen Resonator gemischt sind.

4. Fälschungssichere Struktur nach einem der Ansprüche 1 bis 3, bei der der anisotrope Resonator eine von mehreren Arten von anisotropen Resonatoren ist, die in einem festen Verhältnis in einem Bereich gemischt sind, wobei die mehreren Arten von anisotropen Resonatoren jeweils mit elektromagnetischen Terahertz-Wellen mit unterschiedlichen Polarisationsrichtungen in Resonanz gehen.

5. Fälschungssichere Struktur nach einem der Ansprüche 1 bis 4, bei der der anisotrope Resonator und der isotrope Resonator in einem Grundmuster angeordnet sind, wobei sich das Grundmuster mit anderen anisotropen Resonatoren und anderen isotropen Resonatoren in einem Bereich wiederholt.

6. Fälschungssichere Struktur nach einem der Ansprüche 1 bis 5, bei der der anisotrope Resonator und der isotrope Resonator in einem ersten Bereich angeordnet sind, wobei der erste Bereich einer von mehreren Bereichen ist, die einer vorbestimmten elektromagnetischen Terahertz-Welle als Reaktion auf die Bestrahlung mit der vorbestimmten elektromagnetischen Terahertz-Welle unterschiedliche Durchlässigkeiten verleihen.

7. Fälschungssichere Struktur nach einem der Ansprüche 1 bis 6, die ferner einen weiteren anisotropen Resonator umfasst, wobei der weitere anisotrope Strahler mit einer elektromagnetischen Terahertz-Welle in Resonanz steht, deren Polarisationsrichtung sich um 90 Grad von der der ersten elektromagnetischen Terahertz-Welle unterscheidet.

8. Fälschungssichere Struktur nach einem der Ansprüche 1 bis 7, die ferner eine Hologrammschicht mit einem vorbestimmten Muster aufweist, das unter sichtbarem Licht beobachtet wird.

9. Fälschungssichere Struktur nach einem der Ansprüche 1 bis 8, bei der der anisotrope Resonator und der isotrope Resonator in oder auf einer Banknote angeordnet sind.

10. Fälschungssicheres Medium mit der fälschungssicheren Struktur nach einem der Ansprüche 1 bis 8.

11. Verfahren zur Inspektion einer Fälschungssicherungsstruktur (10), wobei das Verfahren umfasst:
Bestrahlen eines gemischten Bereichs eines Fälschungsschutzmediums (100) der Fälschungsschutzstruktur (10) mit einer elektromagnetischen Terahertz-Inspektionswelle, wobei der gemischte Bereich einen anisotropen Resonator (231, 232) enthält, der in oder auf dem Medium (100) angeordnet ist, wobei der anisotrope Resonator (231, 232) als Reaktion auf die Bestrahlung mit einer ersten elektromagnetischen Terahertz-Welle mit einer ersten Frequenz in Resonanz tritt, eine Transmissivität der ersten elektromagnetischen Terahertz-Welle sich mit einer Polarisationsrichtung der ersten elektromagnetischen Terahertz-Welle ändert, wobei der gemischte Bereich auch einen isotropen Resonator (233) umfasst, der in oder auf dem Medium (100) angeordnet ist, wobei der isotrope Resonator (233) als Reaktion auf die Bestrahlung mit einer zweiten elektromagnetischen Terahertz-Welle mit einer zweiten Frequenz in Resonanz tritt, wobei eine Transmissivität der zweiten elektromagnetischen Terahertz-Welle sich nicht mit einer Polarisationsrichtung der zweiten elektromagnetischen Terahertz-Welle ändert;
Erfassen der Pegel der reflektierten oder übertragenen elektromagnetischen Terahertz-Wellen der Inspektion; und
Vergleichen einer erfassten Intensität, Durchlässigkeit oder Reflektivität der elektromagnetischen Terahertz-Inspektionswelle mit zuvor gespeicherten Referenzdaten, um zu bestimmen, ob ein Artikel, an dem das Fälschungsschutzmedium (100) angebracht ist, eine Fälschung ist.

12. Verfahren nach Anspruch 11, bei dem es sich bei dem Gegenstand um eine Banknote handelt und der Vergleich die Feststellung einschließt, ob die Banknote eine Fälschung ist.

## Revendications

1. Structure de prévention de contrefaçon (10) prévue dans ou sur un support (100) pour authentifier le support (100), la structure de prévention de contrefaçon (10) comprenant :
un résonateur anisotrope (231, 232) qui résonne en réponse au fait d'être irradié avec une première onde électromagnétique térahertz à une première fréquence, une transmissivité de la première onde électromagnétique térahertz change avec une direction de polarisation de la première onde électromagnétique térahertz ; et
un résonateur isotrope (233) qui résonne en réponse au fait d'être irradié avec un seconde onde électromagnétique térahertz à une seconde fréquence, une transmissivité de la seconde onde électromagnétique térahertz ne change pas avec une direction de polarisation de la seconde onde électromagnétique térahertz.

2. Structure de prévention de contrefaçon selon la revendication 1, dans lequel la première fréquence et la seconde fréquence sont une même fréquence.

3. Structure de prévention de contrefaçon selon la revendication 1 ou 2, dans lequel le résonateur anisotrope et le résonateur isotrope sont combinés une région avec au moins un d'un autre résonateur anisotrope ou d'un autre résonateur isotrope.

4. Structure de prévention de contrefaçon selon l'une quelconque des revendications 1 à 3, dans lequel le résonateur anisotrope est un d'une pluralité de types de résonateurs anisotropes combinés en un rapport fixe dans une région, la pluralité de types de résonateurs anisotropes résonnent respectivement avec des ondes électromagnétiques térahertz ayant différentes directions de polarisation.

5. Structure de prévention de contrefaçon selon l'une quelconque des revendications 1 à 4, dans lequel le résonateur anisotrope et le résonateur isotrope sont agencés en un motif de base, le motif de base étant répété avec d'autres résonateurs anisotropes et d'autres résonateurs isotropes dans une région.

6. Structure de prévention de contrefaçon selon l'une quelconque des revendications 1 à 5, dans lequel le résonateur anisotrope et le résonateur isotrope sont agencés dans une première région, la première région étant une d'une pluralité de régions qui confère différentes transmissivités sur une onde électromagnétique térahertz prédéterminée en réponse au fait d'être irradiée avec l'onde électromagnétique térahertz prédéterminée.

7. Structure de prévention de contrefaçon selon l'une quelconque des revendications 1 à 6, comprenant en outre un autre résonateur anisotrope, l'autre radiateur anisotrope résonne avec une onde électromagnétique térahertz ayant une direction de polarisation différente, de 90 degrés, de la première onde électromagnétique térahertz.

8. Structure de prévention de contrefaçon selon l'une quelconque des revendications 1 à 7, comprenant en outre une couche d'hologramme ayant un motif prédéterminé observé sous lumière visible.

9. Structure de prévention de contrefaçon selon l'une quelconque des revendications 1 à 8, dans lequel le résonateur anisotrope et le résonateur isotrope sont disposés dans ou sur un billet de banque.

10. Support de prévention de contrefaçon ayant la structure de prévention de contrefaçon selon l'une quelconque des revendications 1 à 8.

11. Procédé pour inspecter une structure de prévention de contrefaçon (10), le procédé comprenant :
l'irradiation d'une zone mixte d'un support de prévention de contrefaçon (100) de la structure de prévention de contrefaçon (10) avec une onde électromagnétique térahertz d'inspection, la zone mixte incluant un résonateur anisotrope (231, 232) disposé dans ou sur le support (100), le résonateur anisotrope (231, 232) résonne en réponse au fait d'être irradié avec une première onde électromagnétique térahertz à une première fréquence, une transmissivité de la première onde électromagnétique térahertz change avec une direction de polarisation de la première onde électromagnétique térahertz, la zone mixte incluant également un résonateur isotrope (233) disposé dans ou sur le support (100), le résonateur isotrope (233) résonne en réponse au fait d'être irradié avec une seconde onde électromagnétique térahertz à une seconde fréquence, une transmissivité de la seconde onde électromagnétique térahertz ne change pas avec une direction de polarisation de la seconde onde électromagnétique térahertz ;
la détection de niveaux de l'onde électromagnétique térahertz d'inspection qui ont été réfléchis ou transmis ; et
la comparaison d'une intensité, transmissivité, ou réflectivité détectée de l'onde électromagnétique térahertz d'inspection à des données de référence stockées auparavant pour déterminer qu'un article sur lequel le support de prévention de contrefaçon (100) est disposé est, ou n'est pas, une contrefaçon.

12. Procédé de la revendication 11, dans lequel l'article est un billet de banque et la comparaison inclut la détection que le billet de banque est, ou n'est pas, une contrefaçon.
